# EUROPEAN PATENT APPLICATION

(11) **EP 4 756 563 A1**
(43) Date of publication of application: **10.06.2026**
(21) Application number: 24868503.4
(22) Date of filing: 26.08.2024
(51) Int. Cl.: G06F 1/16

(54) **ELECTRONIC DEVICE COMPRISING GUIDE**

(30) Priority: 19.09.2023 KR 20230124543; 20.11.2023 KR 20230161512
(71) Applicant: Samsung Electronics Co., Ltd., Suwon-si, Gyeonggi-do 16677 (KR)
(72) Inventor: YOO, Areum, Suwon-si, Gyeonggi-do 16677 (KR); KIM, Taejeong, Suwon-si, Gyeonggi-do 16677 (KR); MOON, Youngmin, Suwon-si, Gyeonggi-do 16677 (KR); PARK, Byounggyu, Suwon-si, Gyeonggi-do 16677 (KR); BAE, Jaehyun, Suwon-si, Gyeonggi-do 16677 (KR); SONG, Kyunghwan, Suwon-si, Gyeonggi-do 16677 (KR); LEE, Hosoon, Suwon-si, Gyeonggi-do 16677 (KR); CHOI, Jinsoo, Suwon-si, Gyeonggi-do 16677 (KR); CHOI, Hyunsuk, Suwon-si, Gyeonggi-do 16677 (KR)
(74) Representative: Gulde & Partner
(86) International application number: PCT/KR2024/012719
(87) International publication number: WO 2025/063524

(57) **Abstract**

The present disclosure relates to an electronic device. An electronic device, according to one embodiment of the present disclosure, comprises: a flexible display; a support member including a plate having at least a portion of the flexible display mounted thereon and a head protruding from the plate; and a guide including a rail configured to allow at least a portion of the head to be inserted therein, wherein the guide includes: a first guide surface facing the support member; and a second guide surface facing the support member and spaced apart from the first guide surface, and the rail may include: a guide space configured to allow the head to be inserted therein, and having at least a portion formed between the first guide surface and the second guide surface; a first surface extending from the first guide surface in a first direction in which the head is inserted; a first recess including a first inclined surface inclined from the first surface in a direction away from the head; and a second recess including a second inclined surface inclined from the second guide surface in a direction toward the head.

## Description

### [Technical Field]

Various embodiments disclosed herein relate to an electronic device, for example, an electronic device including a guide.

### [Background Art]

Due to advancement in information and communication technology and semiconductor technology, various functions are being integrated into a single portable electronic device. For example, the electronic device may implement not only a communication function, but also entertainment functions such as games, multimedia functions such as music/video playback, communication and security functions for mobile banking, and functions of schedule management and an electronic wallet. Such electronic devices are being miniaturized to allow a user to conveniently carry them.

As mobile communication services expand into the multimedia service domain, it is necessary to increase the display sizes of electronic devices in order to allow users to fully utilize multimedia services, in addition to voice calls and short message services. However, the display sizes of electronic devices are in a trade-off relationship with the miniaturization of electronic devices.

The above-described information may be provided as related art for the purpose of helping to understand the disclosure. No claim or determination is made regarding whether any of the foregoing may be applied as prior art with respect to the disclosure.

### [Detailed Description of the Invention]

### [Technical Solution]

An electronic device according to an embodiment of the disclosure may include a housing including a first housing part and a second housing part configured to move between a retracted position and an extended position with respect to the first housing part, a flexible display supported by the first housing part and the second housing part, a support member movably disposed inside the housing and including a plate on which at least a portion of the flexible display is seated and a head protruding from the plate, and a guide disposed between the housing and the support member and including a rail extending along a direction in which the support member moves. The rail may include a guide space into which the head is inserted, and an expansion space formed in a second direction intersecting a first direction in which the head is inserted, with respect to the guide space.

An electronic device according to an embodiment of the disclosure may include a housing including a first housing part and a second housing part configured to move between a retracted position and an extended position with respect to the first housing part, a flexible display supported by the first housing part and the second housing part, a support member movably disposed inside the housing and including a plate on which at least a portion of the flexible display is seated and a head protruding from the plate, and a guide disposed between the housing and the support member and including a rail having a guide space into which the head of the support member is inserted and extending along a direction in which the support member moves. The rail may include a first surface extending in a direction in which the head is inserted, and a second surface extending from the first surface away from the guide space along an extending direction.

The disclosure relates to an electronic device. An electronic device according to an embodiment of the disclosure may include a flexible display, a support member including a plate on which at least a portion of the flexible display is seated and a head protruding from the plate, and a guide including a rail configured to allow insertion of at least a portion of the head thereinto. The rail may include a guide space into which the head is inserted, and a recess formed in a direction away from the head with respect to the guide space.

An electronic device according to an embodiment of the disclosure may include a flexible display, a support member including a plate on which at least a portion of the flexible display is seated and a head protruding from the plate, and a guide including a rail configured to allow insertion of at least a portion of the head thereinto, the guide including a first guide surface facing the support member and a second guide surface facing the support member and spaced apart from the first guide surface. The rail may be configured to allow insertion of the head thereinto and may include a guide space formed at least in part between the first guide surface and the second guide surface, a first surface extending from the first guide surface in a first direction in which the head is inserted, a first recess including a first inclined surface inclined from the first surface in a direction away from the head, and a second recess including a second inclined surface inclined from the second guide surface in a direction toward the head.

### [Brief Description of Drawings]

The above-described aspects or other aspects, configurations, and/or advantages regarding an embodiment of the disclosure may become more apparent through the following detailed description made with reference to the accompanying drawings.
FIG. 1 is a block diagram of an electronic device according to various embodiments of the disclosure in a network environment.
FIG. 2 is a view illustrating a state in which a portion of a display is accommodated in a housing according to an embodiment of the disclosure.
FIG. 3 is a view illustrating a state in which a portion of the display extends to the outside of the housing according to an embodiment of the disclosure.
FIG. 4 is an exploded view of an electronic device according to an embodiment of the disclosure.
FIG. 5A is a cross-sectional view of an electronic device according to an embodiment of the disclosure.
FIG. 5B is a cross-sectional view of the electronic device according to an embodiment of the disclosure.
FIG. 6A is a cross-sectional view of an electronic device according to an embodiment of the disclosure.
FIG. 6B is a cross-sectional view of the electronic device according to an embodiment of the disclosure.
FIG. 7A is a view illustrating a support body according to an embodiment of the disclosure.
FIG. 7B is a view illustrating a portion of the support body according to an embodiment of the disclosure.
FIG. 8A is a view illustrating a portion of an electronic device according to an embodiment of the disclosure.
FIG. 8B is a cross-sectional view of a portion of the electronic device according to an embodiment of the disclosure.
FIG. 8C is a cross-sectional view of a portion of the electronic device according to an embodiment of the disclosure.
FIG. 8D is a cross-sectional view of a portion of the electronic device according to an embodiment of the disclosure.
FIG. 8E is a cross-sectional view of a portion of the electronic device according to an embodiment of the disclosure.
FIG. 9A is a view illustrating a portion of the electronic device according to an embodiment of the disclosure.
FIG. 9B is a view illustrating a portion of the electronic device according to an embodiment of the disclosure.
FIG. 10 is a partial cross-sectional view of the electronic device according to an embodiment of the disclosure.
FIG. 11 is a view illustrating a portion of the electronic device according to an embodiment of the disclosure.
FIG. 12 is a partial cross-sectional view of an electronic device according to an embodiment of the disclosure.
FIG. 13 is a partial cross-sectional view of the electronic device according to an embodiment of the disclosure.
FIG. 14A is a partial cross-sectional view of an electronic device according to an embodiment of the disclosure.
FIG. 14B is a partial cross-sectional view of the electronic device according to an embodiment of the disclosure.
FIG. 14C is a partial cross-sectional view of the electronic device according to an embodiment of the disclosure.
FIG. 14D is a partial cross-sectional view of the electronic device according to an embodiment of the disclosure.
FIG. 14E is a partial cross-sectional view of the electronic device according to an embodiment of the disclosure.
FIG. 14F is a partial cross-sectional view of the electronic device according to an embodiment of the disclosure.
FIG. 14G is a partial cross-sectional view of the electronic device according to an embodiment of the disclosure.
FIG. 15 is a contour illustrating a stress distribution in a portion of an electronic device according to a comparative example of the disclosure.
FIG. 16 is a view illustrating an electronic device according to an embodiment of the disclosure.
FIG. 17 is a view illustrating an electronic device according to an embodiment of the disclosure.
FIG. 18 is an exploded view of an electronic device according to an embodiment of the disclosure.
FIG. 19 is a partial cross-sectional view of the electronic device according to an embodiment of the disclosure.

Throughout the appended drawings, like reference numerals may be assigned to like components, configurations, and/or structures.

### [Mode for Carrying out the Invention]

The following description with reference to the appended drawings may provide an understanding of various exemplary implementations of the disclosure, including the claims and their equivalents. An exemplary embodiment disclosed in the following description includes various specific details to help understanding, but is considered to be one of various exemplary embodiments. Accordingly, it will be understood by a person ordinarily skilled in the art that various implementations described herein may be variously changed and modified without departing from the scope and spirit of the disclosure. In addition, descriptions of well-known functions and configurations may be omitted for clarity and conciseness.

The terms and words used in the following description and claims are not limited to a bibliographical meaning, but may be used to describe an embodiment of the disclosure clearly and consistently. Accordingly, it will be apparent to those skilled in the art that the following description of various implementations of the disclosure is provided for explanatory purposes and not intended to limit the scope of the disclosure and equivalents thereof.

Unless the context clearly indicates otherwise, the singular forms of "a," "an," and "the" should be understood to include the plural meaning. Accordingly, for example, the term "a component surface" may be understood to include one or more surfaces of the component.

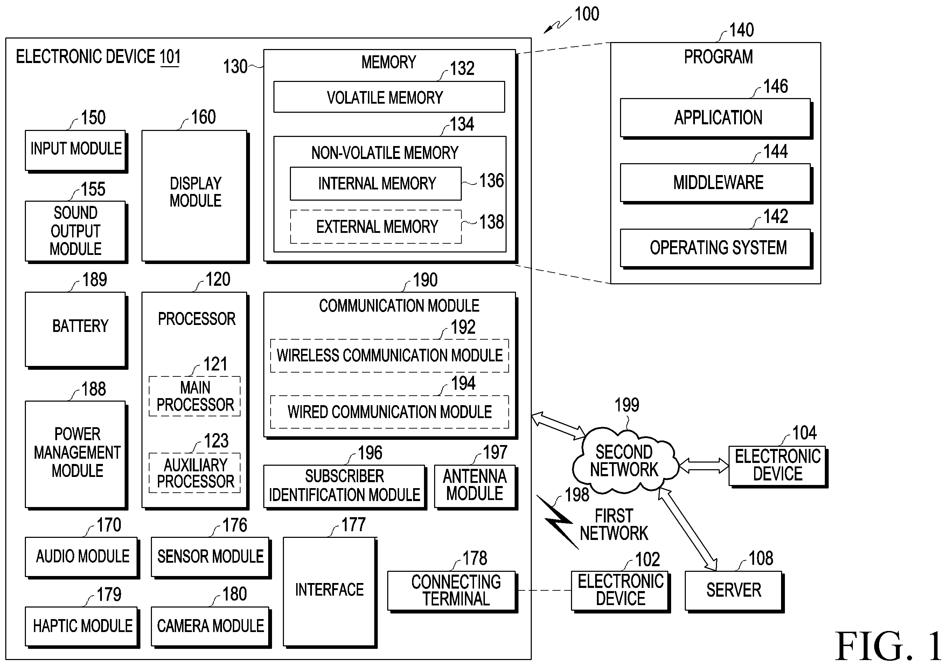

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

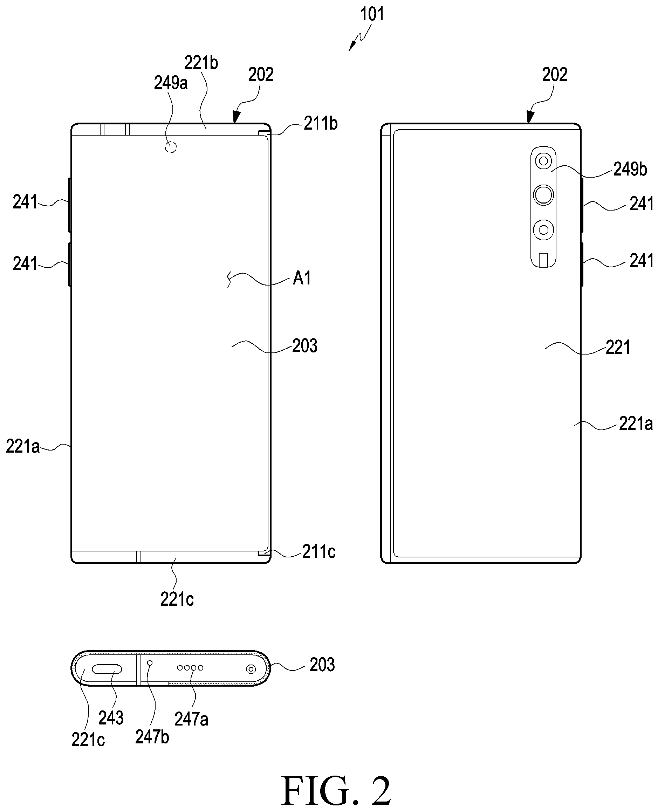

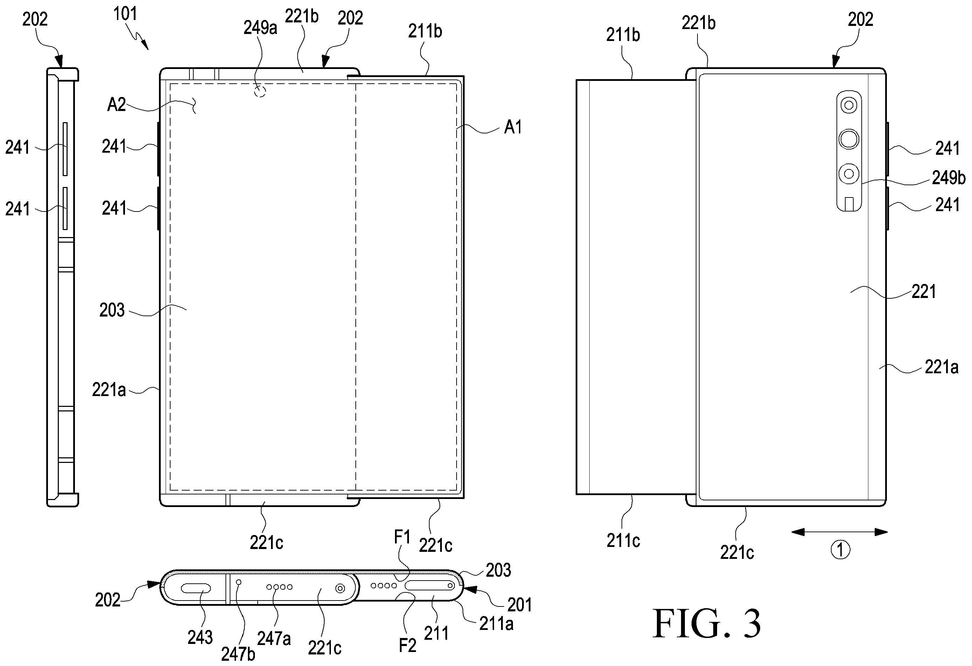

FIG. 2 is a view illustrating the state in which a second display area of a display according to one of various embodiments of the disclosure is accommodated in a second housing. FIG. 3 is a view illustrating the state in which the second display area of the display according to one of various embodiments of the disclosure is exposed to the outside of the second housing.

FIGS. 2 and 3 illustrate a structure in which a display 203 (e.g., a flexible display) extends in a right direction when viewed from the front side of the electronic device 101. However, the extending direction of the display 203 is not limited to one direction (e.g., to the right direction), and the display may be designed to be extendable in the left direction, in the vertical direction, and/or in both directions.

The state illustrated in FIG. 2 may be defined as the state in which the first housing 201 is closed relative to the second housing 202, and the state illustrated in FIG. 3 may be defined as the state in which the first housing 201 is opened relative to the second housing 202. In some embodiments, the "closed state" or the "open state" may be defined as the state in which the electronic device 101 is closed or opened. The first housing 201 may be referred to as a "first housing part." The second housing 202 may be referred to as a "second housing part."

Referring to FIGS. 2 and 3, the electronic device 101 may include a housing 201 and 202. The housings 201 and 202 may include a second housing 202 and a first housing 201 arranged to be movable relative to the second housing 202. In some embodiments, the electronic device 101 may be interpreted as having a structure in which the second housing 202 is arranged to be slidable on the first housing 201. According to an embodiment, the first housing 201 may be disposed to be capable of reciprocating by a predetermined distance in a direction illustrated with respect to the second housing 202, for example, in a direction indicated by arrow ①.

According to various embodiments, the first housing 201 may be referred to as, for example, a first structure, a slide part, or a slide housing, and may be disposed to be capable of reciprocating on the second housing 202. According to an embodiment, the first housing 201 may accommodate various electrical and electronic components such as a circuit board or a battery. The second housing 202 may be referred to as, for example, a second structure, a main unit, or a main housing, and may guide the movement of the first housing 201. A portion of the display 203 (e.g., a first display area A1) may be seated on the first housing 201. According to an embodiment, another portion of the display 203 (e.g., a second display area A2) may be accommodated inside the second housing 202 (e.g., by a slide-in operation) or exposed to the outside of the second housing 202 (e.g., by a slide-out operation) as the first housing 201 moves (e.g., slides) relative to the second housing 202. According to an embodiment, a motor, a speaker, a SIM socket, and/or a sub-circuit board electrically connected to a main circuit board may be arranged in the first housing 201. The main circuit board on which electrical components such as an application processor (AP) and a communication processor (CP) are mounted may be arranged within the second housing 202.

According to various embodiments, the first housing 201 may include a first plate 211 (e.g., a slide plate). The first plate 211 may include a first surface (e.g., the first surface F1 in FIG. 3) forming at least a portion thereof and a second surface F2 facing away from the first surface F1. According to an embodiment, the first plate 211 may support at least a portion of the display 203 (e.g., the first display area A1). According to an embodiment, the first housing 201 may include a first plate 211, a (1-1)^{th} side wall 211a extending from the first plate 211, a (1-2)^{th} side wall 211b extending from the (1-1)^{th} side wall 211a and the first plate 211, and a (1-3)^{th} side wall 211c extending from the (1-1)^{th} side wall 211a and the first plate 211 and substantially parallel to the (1-2)^{th} side wall 211b.

According to various embodiments, the second housing 202 may include a second plate 221 (e.g., a main case), a (2-1)^{th} side wall 221a extending from the second plate 221, a (2-2)^{th} side wall 221b extending from the (2-1)^{th} side wall 221a and the second plate 221, and a (2-3)^{th} side wall 221c extending from the (2-1)^{th} side wall 221a and the second plate 221 and substantially parallel to the (2-2)^{th} side wall 221b. According to an embodiment, the (2-2)^{th} side wall 221b and the (2-3)^{th} side wall 221c may be substantially perpendicular to the (2-1)^{th} side wall 221a. According to an embodiment, the second plate 221, the (2-1)^{th} side wall 221a, the (2-2)^{th} side wall 221b, and the (2-3)^{th} side wall 221c may have a shape open on one side (e.g., the front surface) to accommodate (or surround) at least a portion of the first housing 201. For example, the first housing 201 may be coupled to the second housing 202 in a state of being at least partially surrounded, and may slide, while being guided by the second housing 202, in a direction parallel to the first surface F1 or the second surface F2, for example, in the direction indicated by arrow ①. According to an embodiment, the second plate 221, the (2-1)^{th} side wall 221a, the (2-2)^{th} side wall 221b, and/or the (2-3)^{th} side wall 221c may be integrally configured. According to another embodiment, the second plate 221, the (2-1)^{th} side wall 221a, the (2-2)^{th} side wall 221b, and/or the (2-3)^{th} side wall 221c may be configured as separate housings and coupled to or assembled with each other.

According to various embodiments, the second plate 221 and/or the (2-1)^{th} side wall 221a may cover at least a portion of the display 203. For example, at least a portion of the display 203 may be accommodated in the inside of the second housing 202, and the second plate 221 and/or the (2-1)^{th} side wall 221a may cover a portion of the display 203 accommodated in the inside of the second housing 202.

According to various embodiments, the first housing 201 may be movable relative to the second housing 202 between an open state and a closed state in a first direction parallel to the (2-2)^{th} side wall 221b or the (2-3)^{th} side wall 221c (e.g., direction ①). In the closed state, the first housing 201 may be positioned at a first distance from the (2-1)^{th} side wall 221a, and in the open state, the first housing 201 may move to be positioned at a second distance greater than the first distance from the (2-1)^{th} side wall 221a. In some embodiments, when in the closed state, the first housing 201 may surround a portion of the (2-1)^{th} side wall 221a.

According to various embodiments, the electronic device 101 may include a display 203, key input devices 241, a connector hole 243, audio modules 247a and 247b, or camera modules 249a and 249b. Although not illustrated, the electronic device 101 may further include an indicator (e.g., an LED device) or various sensor modules.

According to various embodiments, the display 203 may include a first display area A1 and a second display area A2. According to an embodiment, the first display area A1 may be disposed on the second housing 202. The second display area A2 may extend from the first display area A1 and, as the first housing 201 slides, may be inserted into or accommodated in the inside of the second housing 202 (e.g., a structure) or exposed to the outside of the second housing 202.

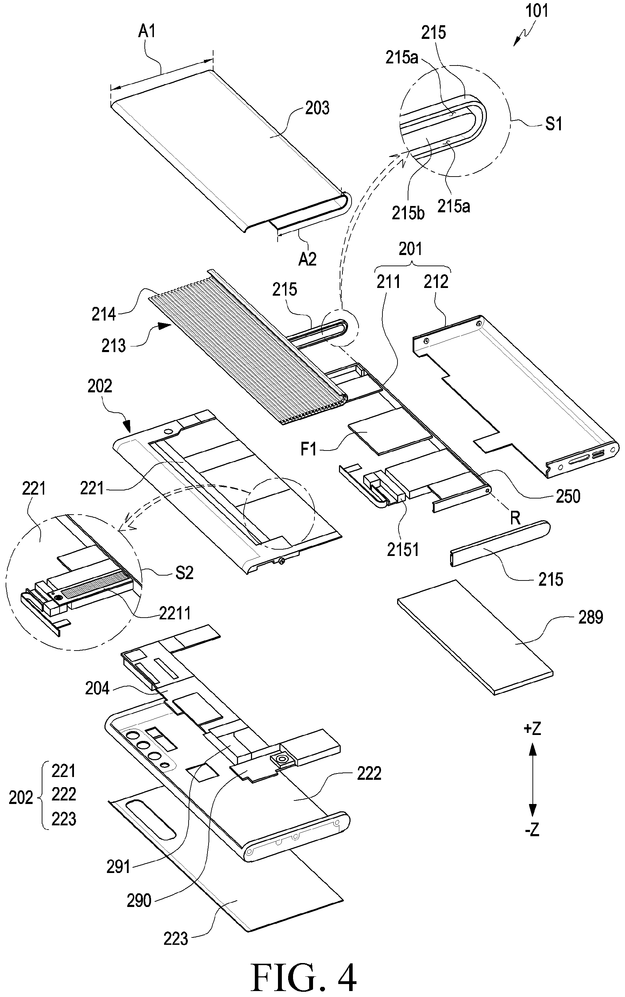

According to various embodiments, the second display area A2 may move while being substantially guided by one area of the first housing 201 (e.g., a curved surface 250 of FIG. 4A), and may be accommodated in the inside of the second housing 202 or in a space formed between the first housing 201 and the second housing 202, or exposed to the outside. According to an embodiment, the second display area A2 may move based on slide movement of the first housing 201 in the first direction (e.g., the direction indicated by arrow ①). For example, while the first housing 201 slides, a portion of the second display area A2 may be deformed into a curved shape at a position corresponding to the curved surface 250 of the first housing 201.

According to various embodiments, when viewed from above the first plate 211 (e.g., a slide plate), as the first housing 201 moves from the closed state to the open state, the second display area A2 may be gradually exposed to the outside of the second housing 202 and, together with the first display area A1, may substantially form a flat surface. The display 203 may be coupled to or arranged adjacent to a touch detection circuit, a pressure sensor configured to measure a touch intensity (pressure), and/or a digitizer configured to detect a magnetic field-type stylus pen. In an embodiment, the second display area A2 may be at least partially accommodated in the inside of the second housing 202, and even in the state illustrated in FIG. 2 (e.g., the closed state), a portion of the second display area A2 may be visually exposed to the outside. According to an embodiment, irrespective of the closed state or the open state, a portion of the exposed second display area A2 may be located on a portion (e.g., the curved surface 250 of FIG. 4A) of the first housing, and at a position corresponding to the curved surface 250, a portion of the second display area A2 may maintain the curved shape.

According to various embodiments, the key input devices 241 may be located in an area of the first housing 201. The electronic device 101 may be designed such that the illustrated key input devices 241 are omitted or additional key input devices are included depending on the external appearance and use state. According to an embodiment, the electronic device 101 may include key input devices (not illustrated), such as a home key button or touch pads arranged around the home key button. According to another embodiment, at least some of the key input devices 241 may be disposed on the (2-1)^{th} side wall 221a, the (2-2)^{th} side wall 221b, or the (2-3)^{th} side wall 221c of the second housing 202.

According to various embodiments, the connector hole 243 may be omitted in some embodiments and may accommodate a connector (e.g., a USB connector) for transmitting/receiving power and/or data to/from an external electronic device. Although not illustrated, the electronic device 101 may include a plurality of connector holes 243, and some of the connector holes 243 may function as connector holes for transmitting/receiving audio signals to/from an external electronic device. In the illustrated embodiment, the connector hole 243 is arranged in the (2-3)^{th} side wall 221c, but the disclosure is not limited thereto. The connector hole 243 or another connector hole (not illustrated) may be arranged in the (2-1)^{th} side wall 221a or the (2-2)^{th} side wall 221b.

According to various embodiments, the audio modules 247a and 247b may include one or more speaker holes 247a or one or more microphone holes 247b. One of the speaker holes 247a may be provided as a receiver hole for a voice call, and another one may be provided as an external speaker hole. The electronic device 101 may include a microphone configured to acquire sound, and the microphone may acquire sound outside the electronic device 101 through the microphone holes 247b. According to an embodiment, the electronic device 101 may include multiple microphones in order to detect the direction of sound. According to an embodiment, the electronic device 101 may include an audio module in which the speaker holes 247a and the microphone holes 247b are implemented as a single hole, or a speaker in which the speaker holes 247a are excluded (e.g., a piezo speaker).

According to various embodiments, the camera modules 249a and 249b may include a first camera module 249a and a second camera module 249b. The electronic device 101 may include multiple camera modules 249a and 249b. For example, the electronic device 101 may include at least one of a wide-angle camera, a telephoto camera, and a close-up camera. In some embodiments, the electronic device 101 may include an infrared projector and/or an infrared receiver to measure the distance to a subject. The camera modules 249a and 249b may include one or more lenses, an image sensor, and/or an image signal processor. The first camera module 249a may be arranged to be oriented in the same direction as the display 203. For example, the first camera module 249a may be arranged around the first display area A1 or in an area overlapping the display 203, and may capture an image of a subject through the display 203 when arranged in the area overlapping the display 203. According to an embodiment, the first camera module 249a may include an under-display camera (UDC) which may be hidden without being visually exposed to a screen display area (e.g., the first display area A1). The second camera module 249b may be located in the first housing 201 and may capture an image of a subject in a direction opposite to the first display area A1 of the display 203.

According to various embodiments, an indicator (not illustrated) of the electronic device 101 may be disposed on the first housing 201 or the second housing 202 and may include a light-emitting diode to provide status information of the electronic device 101 as a visual signal. A sensor module (not illustrated) of the electronic device 101 may generate an electrical signal or a data value corresponding to an internal operating status of the electronic device 101 or an external environmental status. The sensor module may include, for example, a proximity sensor, a fingerprint sensor, or a biometric sensor (e.g., an iris/face recognition sensor or an HRM sensor). In another embodiment, the sensor modules may further include at least one of, for example, a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor.

FIG. 4 is an exploded perspective view of an electronic device according to various embodiments of the disclosure.

Referring to FIG. 4, an electronic device 101 may include a first housing 201, a second housing 202, a display 203 (e.g., a flexible display, a foldable display, or a rollable display), and a support structure 213 (e.g., a multi-joint hinge structure or a multi-bar structure). A portion of the display 203 (e.g., the second display area A2) may be accommodated inside the electronic device 101 along the curved surface 250 of the first housing 201.

The configurations of the first housing 201, the second housing 202, and the display 203 of FIG. 4 may be wholly or partially the same as those of the first housing 201, the second housing 202, and the display 203 of FIGS. 2 and 3.

According to various embodiments, the first housing 201 may include a first plate 211 and a slide cover 212. The first plate 211 and the slide cover 212 may be mounted on (e.g., at least partially connected to) the second housing 202 and may linearly reciprocate in one direction (e.g., the direction indicated by arrow ① of FIGS. 2 and 3) while being guided by the second housing 202. According to an embodiment, the first plate 211 may support the display 203. For example, the first plate 211 may include a first surface F1, and the second display area A2 of the display 203 may be substantially located on the first surface F1 and maintained in a flat plate shape. The slide cover 212 may protect the display 203 located on the first plate 211. For example, at least a portion of the display 203 may be located between the first plate 211 and the slide cover 212. According to an embodiment, the first plate 211 and the slide cover 212 may be made of a metal material and/or a non-metal (e.g., polymer) material. According to an embodiment, the first plate 211 may accommodate at least some of the components of the electronic device 101 (e.g., a battery 289, a motor structure 286, and a rack 287).

According to various embodiments, the support structure 213 may support the display 203. For example, the support structure 213 may be connected or attached to at least a portion of the display 203 (e.g., the second display area A2). According to an embodiment, the support structure 213 may be located between the first plate 211 and the slide cover 212. According to an embodiment, as the first housing 201 slides in one direction (e.g., direction ① of FIGS. 2 and 3), the support structure 213 may move relative to the second housing 202. As the first housing 201 moves in the one direction, the support structure 213 may move relative to the second housing 202. As the first housing 201 slides in the one direction, the support structure 213 may move relative to the second housing 202. In the closed state (e.g., FIG. 2), most of the support structure 213 may be accommodated inside the second housing 202. According to an embodiment, at least a portion of the support structure 213 may move to correspond to the curved surface 250 located at an edge of the first housing 201. The support structure 213 may be referred to as a "support body." The support structure 213 may also be referred to as a "support member."

According to various embodiments, the support structure 213 may include a plurality of rods (or multiple bars 214). The multiple bars 214 may be linearly extended and disposed parallel to the rotation axis R of the curved surface 250 and may be arranged in a direction substantially perpendicular to the rotation axis R (e.g., the direction in which the first housing 201 slides).

According to various embodiments, the electronic device 101 may include guide rails 215 capable of guiding the movement of the multiple bars 214. The guide rails 215 may include an upper end guide rail coupled to the upper end of the first plate 211 and connected to the upper end portions of the plurality of bars 214, and a lower end guide rail coupled to the lower end of the first plate 211 and connected to the lower end portions of the plurality of bars 214. According to an embodiment, referring to the first enlarged area S1, when the plurality of bars 214 are bent or slid while moving on the curved surface 250, the upper end portions and/or the lower end portions of the plurality of bars 214 are movable while maintaining the state of being fitted and coupled to the guide rails 215. For example, the upper end portions and/or the lower end portions of the plurality of bars 214 may slide, in the state of being fitted to groove-shaped rails 215a provided inside the guide rails 215, along the rails 215a. The guide rail 215 may be referred to as a "guide."

According to an embodiment, by the driving of the motor structure 286 (e.g., the driving for slide-out of the display), the first plate 211 on which the motor structure 286 is disposed slides out, and a protrusion 215b provided inside each of the guide rails 215 may push the upper end portions and/or the lower end portions of the bent bars 214. Accordingly, the display 203 accommodated between the first plate 211 and the slide cover 212 may be extended to the front surface. According to an embodiment, by the driving of the motor structure 286 (e.g., the driving for slide-in of the display), the first plate 211 on which the motor structure 286 is disposed may slide in, and an outer portion of each guide rail 215 (e.g., the portion other than the protrusion 215b) may push the upper end portions and/or the lower end portions of the bent bars 214. Accordingly, the extended display 203 may be accommodated between the first plate 211 and the slide cover 212.

According to an embodiment, the rack 287 may be disposed in the second housing 202 and may guide the slide movement of the first housing 201 and the display 203. The second enlarged area S2 represents the rear surface of the second plate 221 (e.g., the surface oriented in the -Z-axis direction). Referring to the second enlarged area S2, the rack 287 may be fixedly disposed on one surface (e.g., the surface oriented in the -Z-axis direction) of the second plate 221 of the second housing 202 and may guide a gear connected to the motor structure (or motor) 286 to move in the sliding direction while rotating. According to another embodiment, the rack 287 may be disposed within the first housing 201 and the motor structure 286 may be disposed within the second housing 202. The rack 287 may guide the slide movement of the second housing 202 and the display 203. For example, the rack 287 may be fixedly disposed on the first plate 211 of the first housing 201, and the motor structure 286 disposed on the second plate 221 of the second housing 202 may slide while rotating with the gear connected to the motor structure 286.

According to various embodiments, the second housing 202 may include a second plate 221, a second plate cover 222, and a third plate 223. The second plate 221 may support the electronic device 101 as a whole. The first plate 211 may be disposed on one surface of the second plate 221, and a printed circuit board 204 may be coupled to the other surface of the second plate 221. The printed circuit board 204 may be referred to as a "main circuit board." According to an embodiment, the second plate 221 may accommodate components of the electronic device 101 (e.g., the battery 289 and the printed circuit board 204). The second plate cover 222 may protect various components located on the second plate 221.

According to various embodiments, a plurality of circuit boards may be accommodated in the second housing 202. On the printed circuit board 204 serving as the main circuit board, a processor, memory, and/or an interface may be mounted. The processor may include, for example, one or more of a central processing unit, an application processor, a graphics processing unit, an image signal processor, a sensor hub processor, or a communication processor. According to various embodiments, the printed circuit board 204 may include a flexible printed circuit board-type radio frequency cable (FRC). For example, the printed circuit board 204 may be disposed in at least a portion of the second plate 221 and may be electrically connected to an antenna module and a communication module.

According to an embodiment, the memory may include, for example, volatile memory or non-volatile memory.

According to an embodiment, the interface may include, for example, a high-definition multimedia interface (HDMI), a universal serial bus (USB) interface, an SD card interface, and/or an audio interface. For example, the interface may electrically or physically connect the electronic device 101 to an external electronic device, and may include a USB connector, an SD card/MMC connector, or an audio connector.

According to various embodiments, the electronic device 101 may further include a separate sub-circuit board 290 spaced apart from the printed circuit board 240 in the second housing 202. The sub-circuit board 290 may be electrically connected to the printed circuit board 240 via a flexible connection board 291. The sub-circuit board 290 may be electrically connected to the battery 289 or electrical components disposed in an end area of the electronic device 101, such as a speaker and/or a SIM socket, to transmit signals and power.

According to various embodiments, the battery 289 may serve as a device that supplies power to at least one component of the electronic device 101, and may include, for example, a non-rechargeable primary cell, a rechargeable secondary cell, or a fuel cell. At least a portion of the battery 289 may be, for example, disposed on substantially the same plane as the printed circuit board 204. The battery 289 may be integrally disposed inside the electronic device 101 or may be detachably disposed on the electronic device 101.

According to an embodiment, the battery 289 may be configured as a single integrated battery or may include a plurality of separable batteries. For example, when the integrated battery is located on the first plate 211, the battery may move along with the sliding of the first plate 211.

According to various embodiments, the third plate 223 may substantially define at least a portion of the exterior of the second housing 202 or the electronic device 101. For example, the third plate 223 may be coupled to the outer surface of the second plate cover 222. According to an embodiment, the third plate 223 may be configured integrally with the second plate cover 222. According to an embodiment, the third plate 223 may provide a decorative effect on the exterior of the electronic device 101. The second plate 221 and the second plate cover 222 may be manufactured by using at least one of metal or polymer, and the third plate 223 may be manufactured by using at least one of metal, glass, synthetic resin, or ceramic. According to an embodiment, the second plate 221, the second plate cover 222, and/or the third plate 223 may be made of a material that transmits light at least partially (e.g., in an auxiliary display area). For example, in the state in which a portion of the display 203 (e.g., the second display area A2) is accommodated inside the electronic device 101, the electronic device 101 may output visual information by using the second display area A2. The auxiliary display area may be a portion of the second plate 221, the second plate cover 222, and/or the third plate 223 in which the display 203 accommodated inside the second housing 202 is located.

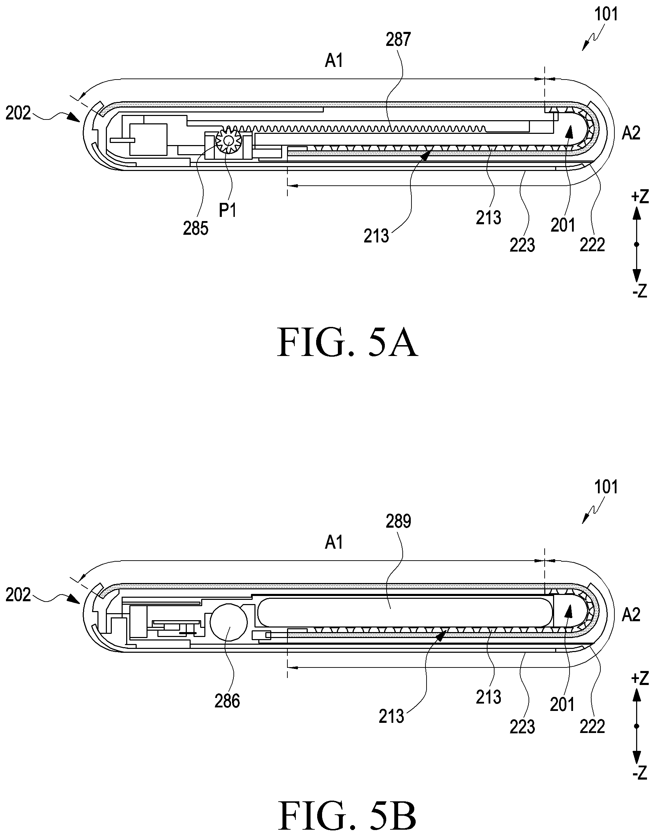

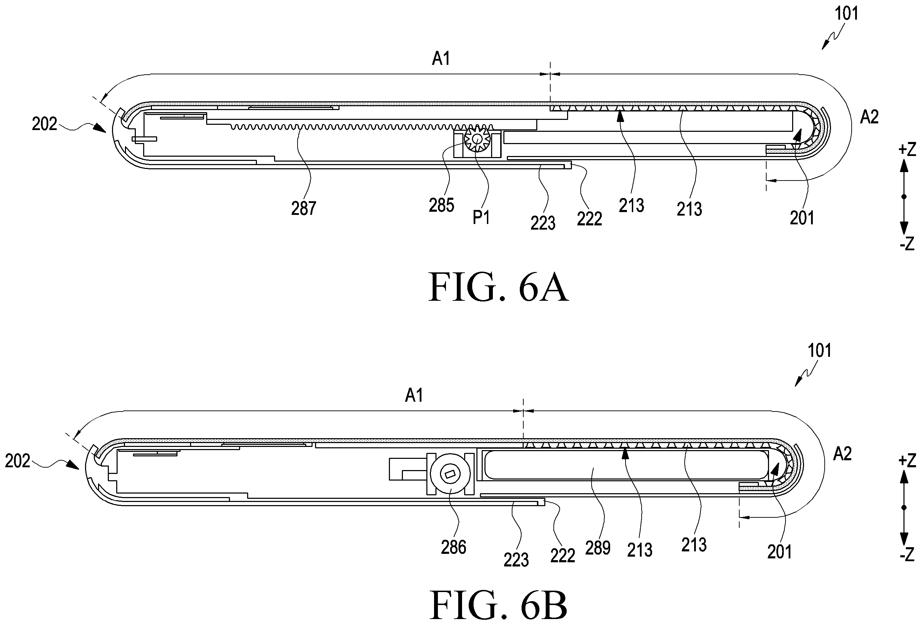

FIG. 5A is a cross-sectional view illustrating associated configurations of the rack and the gear connected to the motor in the state in which the electronic device according to various embodiments of the disclosure is closed. FIG. 5B is a cross-sectional view illustrating an arrangement relationship of the motor and the battery in the state in which the electronic device according to various embodiments of the disclosure is closed. FIG. 6A is a cross-sectional view illustrating associated components of the rack and the gear connected to the motor in the state in which the electronic device according to various embodiments of the disclosure is opened. FIG. 6B is a cross-sectional view illustrating an arrangement relationship of the motor and the battery in the state in which the electronic device according to various embodiments of the disclosure is opened.

According to various embodiments, the electronic device 101 may include a first housing 201, a second housing 202, a display 203, and a driving structure (e.g., the rack 287 and the motor structure 286). The electronic device 101 may further include various components (e.g., a camera module and a battery) disposed in the first housing 201 or the second housing 202.

The configurations of the first housing 201 and the second housing 202 of FIGS. 5A to 6B may be partially or entirely the same as the configurations of the first housing 201 and the second housing 202 of FIGS. 2 to 4.

According to various embodiments, depending on whether the first housing 201 (and the flexible display 203 connected to the first housing 201) slides in or slides out relative to the second housing 202, the electronic device may be in the closed state or the open state.

According to various embodiments, the electronic device 101 may include a driving structure for automatically or semi-automatically providing the slide-in/out operation of the display 203. For example, when a user pushes an open trigger button (e.g., the key input device 241 of FIG. 2) exposed to the outside of the electronic device 101, the display 203 may automatically slide in or slide out (automatic operation). As another example, when the user pushes the display 203 of the electronic device 101 to slide out up to a predetermined section, the remaining section may completely slide out by the force of an elastic member mounted in the electronic device 101 (semi-automatic operation). The slide-in operation of the electronic device 101 may also be performed to correspond to the slide-out operation (semi-automatic operation).

According to an embodiment, the driving structure may include a motor structure 286, a gear 285 mounted at an end of the motor structure 286, a rack 287, and a sub-circuit board (not illustrated) electrically connected to the motor structure 286. According to an embodiment, the gear 285 may be a pinion gear. According to an embodiment, the rack 287 may be engaged with the gear 285. For example, the gear 285 may rotate based on the rotation of the motor structure 286, and the rack 287 may receive at least a portion of the driving force generated by the motor structure 286 via the gear 285.

According to an embodiment, the motor structure 286 may be disposed within the first housing 201 to be slidable relative to the second housing 202. The motor structure 286 may transmit a driving force to the gear 285 connected to an end portion thereof.

According to an embodiment, the motor structure 286 may be disposed not to overlap the second display area A2 of the display 203. For example, a shaft P1 of the motor structure 286 may be disposed to be perpendicular to the sliding direction, and one surface of the motor structure 286 oriented in the +Z-axis direction may overlap the first display area A1, but one surface oriented in the -Z-axis direction may be disposed not to overlap the second display area A2 regardless of the slide-in and the slide-out of the display 203. The one surface of the motor structure 286 oriented in the -Z axis direction may face the first housing 201 in the slide-in state of the display 203 and may face the second housing 202 in the slide-out state of the display 203. According to an embodiment, the motor structure 286 may be disposed in parallel with at least a portion of the battery 289 and may be electrically connected to the sub-circuit board disposed adjacent thereto.

According to an embodiment, the rack 287 may be disposed in the second housing 202 and guide the sliding of the first housing 201 and the display 203. The rack 287 may be fixedly disposed on one surface (e.g., the one surface oriented in the -Z-axis direction) of the second plate 221 of the second housing 202 and guide the gear 285 to be movable in the sliding direction to move while rotating. At least a portion of the one surface of the rack 287 oriented in the -Z-axis direction may face the second display area A2 in the slide-in state of the display 203 and may not face the second display area A2 in the slide-out state of the display 203. According to an embodiment, the rack 287 may be disposed not to overlap the battery 289. For example, when separable batteries are disposed in the electronic device 101, the rack 287 may be located between respective batteries when viewed toward the rear surface.

According to an embodiment, the gear 285 may be located on the shaft P1 of the motor structure 286 and may cause the first housing 201 and the display 203 to slide while rotating and moving along the rack 287. When the first housing 201 slides due to rotation of the gear 285, an electrical component (hereinafter, referred to as a first electrical component) disposed in the first housing 201 may also slide. For example, the first electrical component may be at least one of the motor structure 286, components disposed on the sub-circuit board 290, a speaker, or a SIM socket. As another example, the first electrical component may be the battery 289. When the battery 289 is a separable battery, the first electrical component may be at least one of separable batteries.

According to an embodiment, the sub-circuit board may be disposed adjacent to the motor structure 286 and/or the rack 287 in the first housing 201. The sub-circuit board 290 may be configured to be electrically connected to a main circuit board (e.g., the printed circuit board 204 of FIG. 4) disposed in the second housing 202. The main circuit board may accommodate an electrical structure (e.g., a processor) to control driving of the motor structure 286 or to provide power to the motor structure 286. The sub-circuit board may be electrically connected to the main circuit board 204 to transmit signals for controlling driving of the motor structure 286 or for controlling power. According to an embodiment, the sub-circuit board and the main circuit board 204 may be rigid boards, and the electronic device 101 further include a separate connection flexible printed circuit board (FPCB) for interconnecting the sub-circuit board and the main circuit board 204. According to another embodiment, power from the battery 289 disposed adjacent to the motor structure 286 may directly provide power via the sub-circuit board.

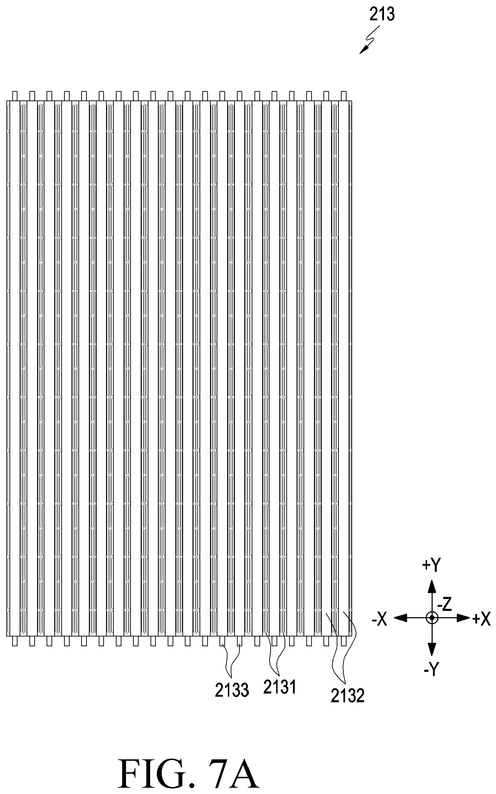

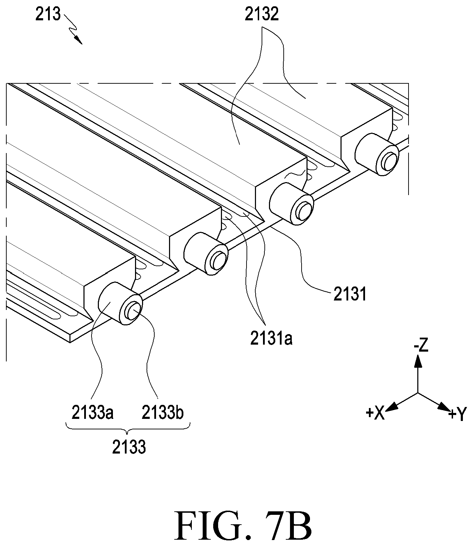

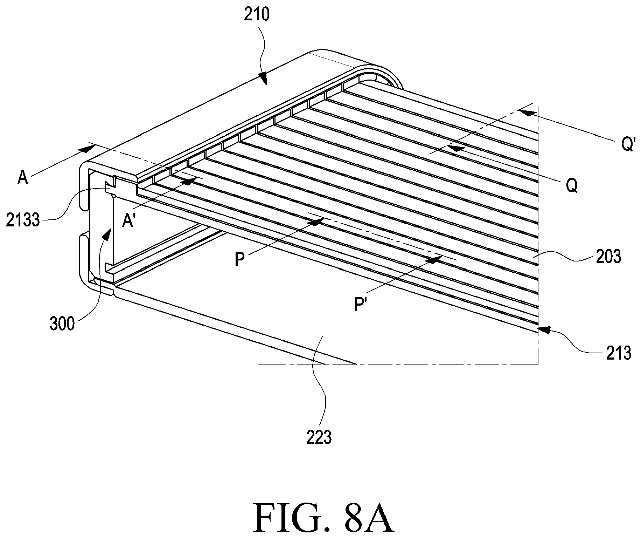

FIG. 7A is a view illustrating a support member 213 according to an embodiment of the disclosure. FIG. 7B is an enlarged view of a portion of the support member 213 illustrated in FIG. 7A. Components described with reference to FIGS. 7A and 7B may be partially or entirely the same as components described with reference to FIGS. 1 to 6B. Components described with reference to FIGS. 7A and 7B may be partially or entirely the same as components described with reference to FIGS. 8A to 19.

According to an embodiment, one element may intersect another element. The one element and the other element may be directions. For example, a first direction may intersect a second direction. The expression "the first direction intersects with the second direction" may be applied to a case in which the first direction and the second direction generate an intersection point. When the first direction and the second direction intersect, an angle may be formed between the first direction and the second direction. The angle between the first direction and the second direction that intersect each other may be 90 degrees (a right angle). The first direction and the second direction may be perpendicular to each other. The first direction and the second direction may intersect each other with an included angle of 90 degrees. The first direction may extend vertically with respect to the second direction. The first direction may intersect the second direction in a vertical direction. In the following description of components, the term "intersect" may be a concept including "perpendicular" and "vertical." For example, "perpendicular" may be defined as a positional relationship in which the first direction and the second direction intersect at an angle of 90 degrees. For example, "vertical" may be defined as a positional relationship in which the first direction extends with respect to the second direction at an angle of 90 degrees. "Perpendicular" and "vertical" may include not only a case in which an angle between the first direction and the second direction is 90 degrees, but also a case in which the angle is substantially close to 90 degrees.

According to an embodiment, the support member 213 may include a plate 2131 and a support bar 2132. The support bar 2132 may protrude from the plate 2131. A plurality of the support bars 2132 may be disposed to be spaced apart from each other. The support members 213 may each include a head 2133. The head 2133 may protrude from each of the support bars 2132. The support bars 2132 may be identical to the multi-bars 214 described with reference to FIG. 4. The head 2133 may be inserted into the guide rail 215 described with reference to FIG. 4.

According to an embodiment, the plate 2131 and the support bars 2132 may be integrally formed. The support bars 2132 may integrally protrude from the plate 2131. The plate 2131 may have a lattice shape. The plate 2131 may include a plurality of plate holes 2131a. The head 2133 may protrude from each of the support bars 2132. The head 2133 may include a first head portion 2133a and a second head portion 2133b having different diameters from each other.

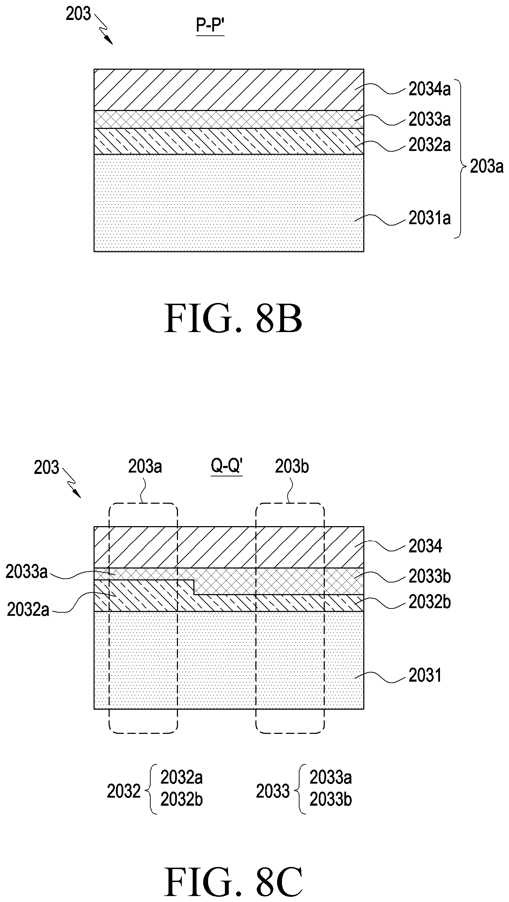

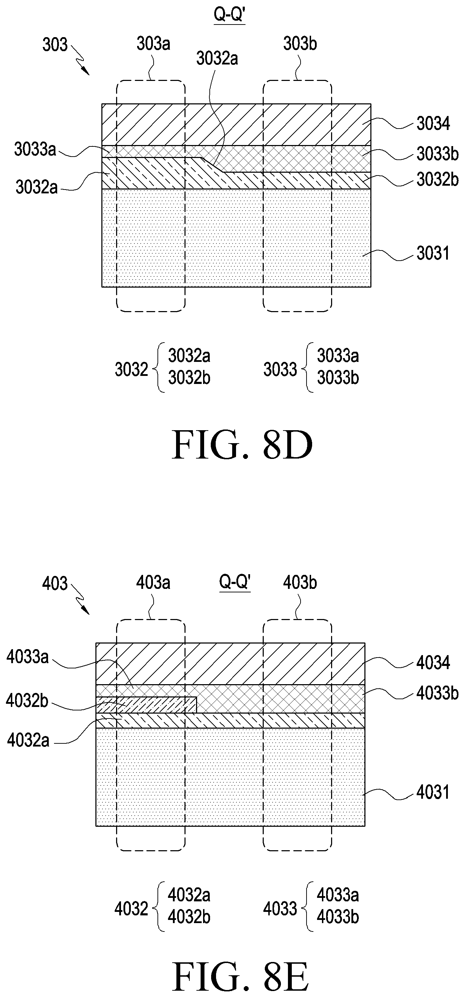

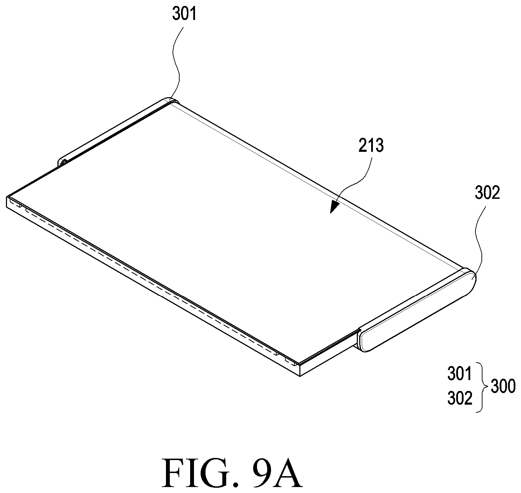

FIG. 8A is a view illustrating a cut-away portion of an electronic device 101 according to an embodiment of the disclosure. FIG. 8B is a cross-sectional view taken along a reference line P-P' illustrated in FIG. 8A. FIG. 8C is a cross-sectional view taken along a reference line Q-Q' illustrated in FIG. 8A, according to an embodiment. FIG. 8D is a cross-sectional view taken along the reference line Q-Q' illustrated in FIG. 8A, according to an embodiment. FIG. 8E is a cross-sectional view taken along the reference line Q-Q' illustrated in FIG. 8A, according to an embodiment. Components described with reference to FIGS. 8A to 8E may be partially or entirely the same as components described with reference to FIGS. 1 to 7B. Components described with reference to FIGS. 8A to 8E may be partially or entirely the same as components described with reference to FIGS. 9A to 19.

According to an embodiment, the electronic device 101 may include a housing 210. The housing 210 may include the first housing 201 and the second housing 202 described with reference to FIGS. 1 to 7.

According to an embodiment, the electronic device 101 may include a third plate 223, a support member 213, and a display 203. The third plate 223 may form a rear surface of the electronic device 101. The third plate 223 may be referred to as a "rear surface plate." The display 203 may be seated on the support member 213.

According to an embodiment, the electronic device 101 may include a guide 300. The guide 300 may be disposed inside the housing 210. The support member 213 may include a head 2133. The head 2133 may be inserted into the guide 300. The head 2133 may be movably disposed inside the guide 300.

Referring to FIG. 8B, the display 203 may include a first display area 203a. The first display area 203a may be a flat portion of the display 203 illustrated in FIG. 8A. The first display area 203a may include a panel 2031a, a glass layer 2032a, a filling layer 2033a, and a protective layer 2034a. The panel 2031a may display an image. The glass layer 2032a may be coupled to the panel 2031a. The glass layer 2032a may be disposed between the panel 2031a and the protective layer 2034a. The filling layer 2033a may be disposed between the glass layer 2032a and the protective layer 2034a.

Referring to FIG. 8C, the display 203 may include a second display area 203b. The second display area 203b may be a curved portion of the display 203 illustrated in FIG. 8A. The display 203 may include a panel 2031, a glass layer 2032, a filling layer 2033, and a protective layer 2034. The respective layers 2031, 2032, 2033, and 2034 of the display 203 may be stacked. The glass layer 2032 may be disposed between the panel 2031 and the protective layer 2034. The filling layer 2033 may be disposed between the glass layer 2032 and the protective layer 2034. A thickness of the glass layer 2032 in the first display area 203a and a thickness of the glass layer 2032 in the second display area 203b may be different from each other. For example, the glass layer 2032 may include a first glass portion 2032a positioned in the first display area 203a and having a first thickness, and a second glass portion 2032b positioned in the second display area 203b and having a second thickness smaller than the first thickness. A thickness of the filling layer 2033 in the first display area 203a and a thickness of the filling layer 2033 in the second display area 203b may be different from each other. For example, the filling layer 2033 may include a first filling portion 2033a positioned in the first display area 203a and having a first thickness, and a second filling portion 2033b positioned in the second display area 203b and having a second thickness greater than the first thickness.

Referring to FIG. 8D, the display 303 may include a first display area 303a and a second display area 303b. The first display area 303a may be a flat portion of the display 203 illustrated in FIG. 8A. The second display area 303b may be a curved portion of the display 203 illustrated in FIG. 8A. The display 303 may include a panel 3031, a glass layer 3032, a filling layer 3033, and a protective layer 3034. The respective layers 3031, 3032, 3033, and 3034 of the display 303 may be stacked. The glass layer 3032 may be disposed between the panel 3031 and the protective layer 3034. The filling layer 3033 may be disposed between the glass layer 3032 and the protective layer 3034. A thickness of the glass layer 3032 in the first display area 303a and a thickness of the glass layer 3032 in the second display area 303b may be different from each other. For example, the glass layer 3032 may include a first glass portion 3032a positioned in the first display area 303a and having a first thickness, and a second glass portion 3032b positioned in the second display area 303b and having a second thickness smaller than the first thickness. A thickness of the filling layer 3033 in the first display area 303a and a thickness of the filling layer 3033 in the second display area 303b may be different from each other. For example, the filling layer 3033 may include a first filling portion 3033a positioned in the first display area 303a and having a first thickness, and a second filling portion 3033b positioned in the second display area 303b and having a second thickness greater than the first thickness. The glass layer 3032 may include a third glass portion 3032c that extends obliquely between the first display area 303a and the second display area 303b.

Referring to FIG. 8E, the display 403 may include a first display area 403a and a second display area 403b. The first display area 403a may be a flat portion of the display 203 illustrated in FIG. 8A. The second display area 403b may be a curved portion of the display 203 illustrated in FIG. 8A. The display 403 may include a panel 4031, a glass layer 4032, a filling layer 4033, and a protective layer 4034. The respective layers 4031, 4032, 4033, and 4034 of the display 403 may be stacked. The glass layer 4032 may be disposed between the panel 4031 and the protective layer 4034. The filling layer 4033 may be disposed between the glass layer 4032 and the protective layer 4034. A thickness of the glass layer 4032 in the first display area 403a and a thickness of the glass layer 4032 in the second display area 403b may be different from each other. For example, the glass layer 4032 may include a first glass portion 4032a positioned in the first display area 403a and the second display area 403b, and a second glass portion 3032b positioned in the first display area 403a and stacked on the first glass portion 4032a. The second glass portion 4032b may not be positioned in the second display area 403b. A thickness of the filling layer 4033 in the first display area 403a and a thickness of the filling layer 4033 in the second display area 403b may be different from each other. For example, the filling layer 4033 may include a first filling portion 4033a positioned in the first display area 403a and having a first thickness, and a second filling portion 4033b positioned in the second display area 403b and having a second thickness greater than the first thickness.

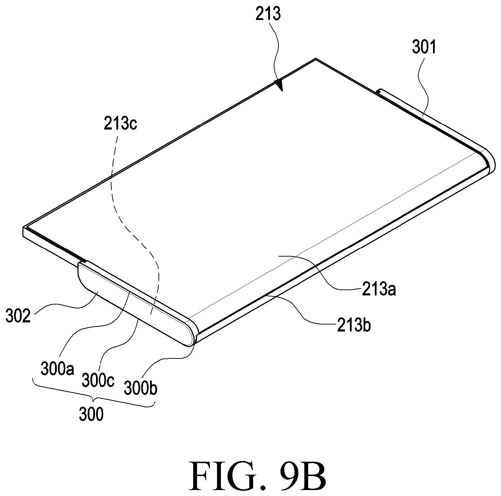

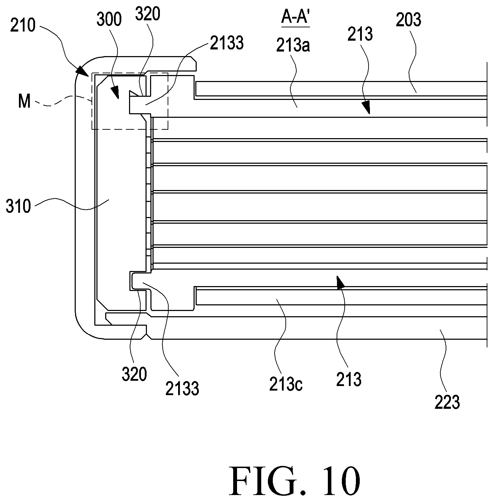

FIG. 9A is a perspective view illustrating a state in which a support member 213 and a guide 300 are assembled with each other. FIG. 9B is a perspective view illustrating a state in which the support member 213 and the guide 300 are assembled with each other. Components described with reference to FIGS. 9A and 9B may be partially or entirely the same as components described with reference to FIGS. 1 to 8E. Components described with reference to FIGS. 9A and 9B may be partially or entirely the same as components described with reference to FIGS. 10 to 19.

According to an embodiment, the support member 213 may move along the guide 300. The guide 300 may be disposed on each of opposite side surfaces of the support member 213. The guide 300 may include a first guide 301 disposed on one side of the support member 213 and a second guide 302 disposed on the other side of the support member 213. The support member 213 may be movably disposed between the first guide 301 and the second guide 302.

According to an embodiment, the guide 300 may include a first guide portion 300a, a second guide portion 300b, and a third guide portion 300c. The first guide portion 300a, the second guide portion 300b, and the third guide portion 300c may be integrally formed. The first guide portion 300a may be a portion closer to a display (e.g., the display 203 of FIG. 8) than the third guide portion 300c. The first guide portion 300a may be a portion positioned at a front side of the guide 300 (e.g., in the +Z direction of FIGS. 1 to 7). The second guide portion 300b may curvedly extend from the first guide portion 300a. The second guide portion 300b may be referred to as a "bending portion." The display 203 and the support member 213 may be bent at the second guide portion 300b. The third guide portion 300c may be a portion closer to a rear surface plate (e.g., the rear surface plate 223 of FIG. 8) than the first guide portion 300a. The third guide portion 300c may be a portion positioned at a rear side of the guide 300 (e.g., in the -Z direction of FIGS. 1 to 7). The first guide portion 300a and the third guide portion 300c may extend substantially parallel to each other. The second guide portion 300b may connect the first guide portion 300a and the third guide portion 300c.

According to an embodiment, the support member 213 may include a first support portion 213a, a second support portion 213b, and a third support portion 213c. The first support portion 213a may move along the first guide portion 300a. The second support portion 213b may move along the second guide portion 300b. The third support portion 213c may move along the third guide portion 300c. The first support portion 213a may be a portion of the support member 213 corresponding to the first guide portion 300a. The second support portion 213b may be a portion of the support member 213 corresponding to the second guide portion 300b. The third support portion 213c may be a portion of the support member 213 corresponding to the third guide portion 300c. As the support member 213 moves, portions of the support member 213 defined as the first to third support portions 213a, 213b, and 213c may be changed. For example, the first to third support portions 213a, 213b, and 213c may be portions positioned between the first guide 301 and the second guide 302 in one operating state in which the support member 213 moves (e.g., the state of FIG. 9B).

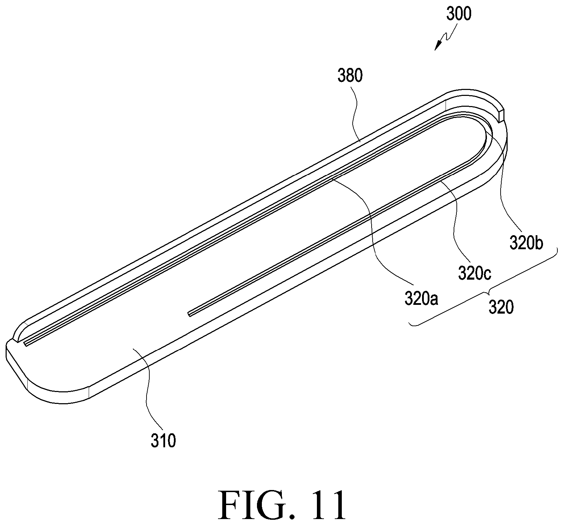

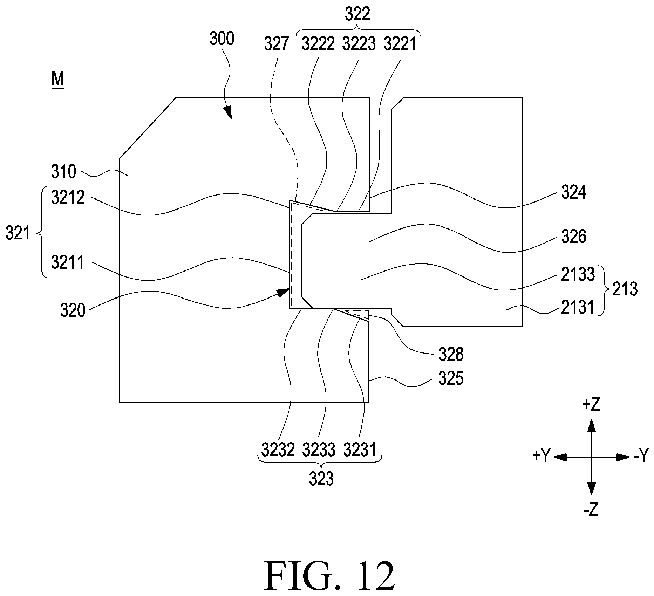

FIG. 10 is a partial cross-sectional view of the electronic device 101 taken along a reference line A-A' illustrated in FIG. 8. FIG. 11 is an exploded view illustrating the guide 300. Components described with reference to FIGS. 10 and 11 may be partially or entirely the same as components described with reference to FIGS. 1 to 9B. Components described with reference to FIGS. 10 and 11 may be partially or entirely the same as components described with reference to FIGS. 12 to 19.

According to an embodiment, the support member 213 may move along the guide 300. The guide 300 may be disposed between the housing 210 and the support member 213. The support member 213 may include a head 2133 inserted into the guide 300. The guide 300 may include a guide body 310 and a rail 320 formed in the guide body 310. The head 2133 may be inserted into the rail 320. The head 2133 may move along the rail 320. The rail 320 may extend along the first, second, and third guide portions 300a, 300b, and 300c illustrated in FIGS. 9A and 9B. The support member 213 may be disposed between the display 203 and the rear surface plate 223.

According to an embodiment, the guide 300 may include the guide body 310 and the rail 320. The guide body 310 may be disposed between the housing 210 and the support member 213. The rail 320 may be formed to be recessed in the guide body 310. The rail 320 may be at least partially curved. The guide 300 may include a guide cover 380. The guide cover 380 may protrude from the guide body 310.

According to an embodiment, the rail 320 may include a first rail portion 320a, a second rail portion 320b, and a third rail portion 320c. The first rail portion 320a, the second rail portion 320b, and the third rail portion 320c may be connected to each other. The first rail portion 320a may be formed at a position corresponding to the first guide portion 300a illustrated in FIG. 9B. The second rail portion 320b may be formed at a position corresponding to the second guide portion 300b illustrated in FIG. 9B. The third rail portion 320c may be formed at a position corresponding to the third guide portion 300c illustrated in FIG. 9B. The first support portion 213a illustrated in FIG. 9B may move along the first rail portion 320a. The second support portion 213b illustrated in FIG. 9B may move along the second rail portion 320b. The third support portion 213c illustrated in FIG. 9B may move along the third rail portion 320c. The second rail portion 320b may connect the first rail portion 320a and the third rail portion 320c. The second rail portion 320b may be referred to as a "rail bending portion." The guide cover 380 may be disposed at a position corresponding to the first rail portion 320a.

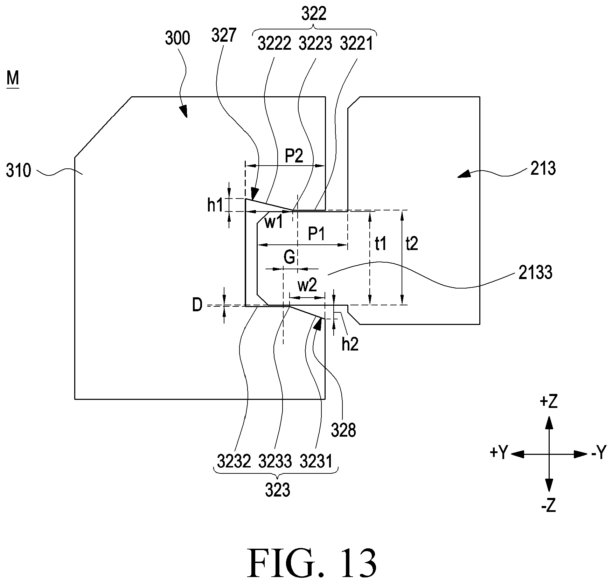

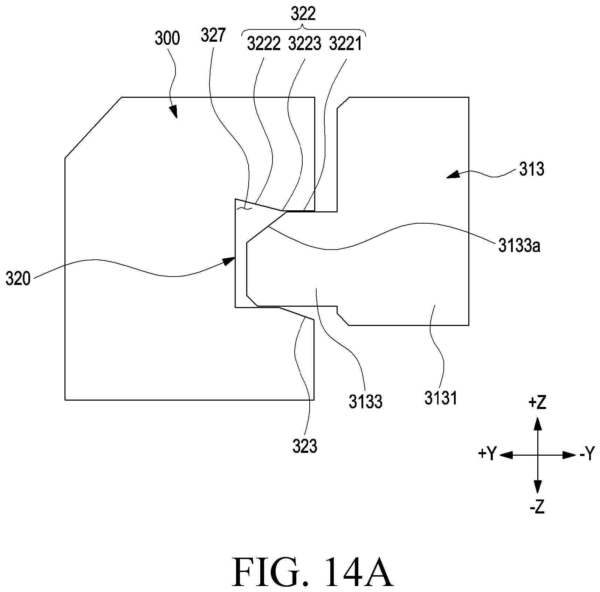

FIG. 12 is an enlarged view of region M illustrated in FIG. 10. FIG. 13 is an enlarged view of region M illustrated in FIG. 10. Components described with reference to FIGS. 12 and 13 may be partially or entirely the same as components described with reference to FIGS. 1 to 11. Components described with reference to FIGS. 12 and 13 may be partially or entirely the same as components described with reference to FIGS. 14A to 19.

According to an embodiment, the support member 213 may include a plate 2131 and a head 2133. The head 2133 may protrude from the plate 2131 toward the guide 300. The head 2133 may be inserted into the rail 320. The head 2133 may be movably disposed inside the rail 320.

According to an embodiment, the guide 300 may include the rail 320. The rail 320 may be formed to be recessed in the guide body 310. The guide 300 may include a first wall 324 and a second wall 325. The first wall 324 and the second wall 325 may be spaced apart from each other. The first wall 324 may face the support member 213. The second wall 325 may face the support member 213. The head 2133 may be inserted between the first wall 324 and the second wall 325. The rail 320 may be disposed between the first wall 324 and the second wall 325. The first wall 324 and the second wall 325 may be aligned in a first direction (e.g., the +Z direction). The first wall 324 and the second wall 325 may form one surface of the guide 300 that faces the support member 213. For example, the first wall 324 may include a "first guide surface 324" facing the support member 213. For example, the second wall 325 may include a second guide surface 325 that faces the support member 213 and is spaced apart from the first guide surface 324. The first wall 324 may be referred to as a "first guide surface." The second wall 325 may be referred to as a "second guide surface." The first guide surface 324 and the second guide surface 325 may be spaced apart from each other, and at least a portion of a guide space 326 may be formed between the first guide surface 324 and the second guide surface 325. A (2-1)^{th} surface 3221 may extend from the first guide surface 324 toward the guide space 326. A (3-1)^{th} surface 3231 may extend from the second guide surface 325 toward the guide space 326.

According to an embodiment, the rail 320 may include a first rail wall 321, a second rail wall 322, and a third rail wall 323. The first rail wall 321, the second rail wall 322, and the third rail wall 323 may form boundary surfaces of the rail 320. The first rail wall 321, the second rail wall 322, and the third rail wall 323 may be disposed inside the guide body 310. The first rail wall 321, the second rail wall 322, and the third rail wall 323 may surround the guide space 326. The first rail wall 321 may be positioned, with respect to the head 2133, in a first direction (e.g., the +Y direction) in which the head 2133 is inserted. The second rail wall 322 may be positioned, with respect to the head 2133, in a second direction (e.g., the +Z direction) intersecting the first direction (+Y direction) in which the head 2133 is inserted. The third rail wall 323 may be positioned, with respect to the head 2133, in a third direction (e.g., the -Z direction) intersecting the first direction (+Y direction) in which the head 2133 is inserted. The first rail wall 321 may connect the second rail wall 322 and the third rail wall 323. The second rail wall 322 and the third rail wall 323 may be spaced apart from each other, and the head 2133 may be positioned between the second rail wall 322 and the third rail wall 323.

According to an embodiment, the first rail wall 321 may include a (1-1)^{th} surface 3211. The (1-1)^{th} surface 3211 may face the head 2133. The first rail wall 321 may include a (1-2)^{th} surface 3212. The (1-2)^{th} surface 3212 may extend from the (1-1)^{th} surface 3211 toward the second rail wall 322. The (1-2)^{th} surface 3212 may be positioned to be offset from the head 2133 in the first direction (e.g., the +Y direction) in which the head 2133 is inserted.

According to an embodiment, the second rail wall 322 may include a (2-1)^{th} surface 3221. The (2-1)^{th} surface 3221 may extend from the first wall 324 in the first direction (e.g., the +Y direction) in which the head 2133 is inserted. The second rail wall 322 may include a (2-2)^{th} surface 3222. The (2-2)^{th} surface 3222 may extend toward the first rail wall 321. The (2-2)^{th} surface 3222 may be inclined in a direction away from the space 326 into which the head 2133 is inserted. The second rail wall 322 may include a first curved surface 3223. The first curved surface 3223 may connect the (2-1)^{th} surface 3221 and the (2-2)^{th} surface 3222. The first curved surface 3223 may be curved from the (2-1)^{th} surface 3221 in a direction away from the space 326 into which the head 2133 is inserted. The (2-1)^{th} surface 3221 may be referred to as a "first surface." The (2-2)^{th} surface 3222 may be referred to as a "second surface." The (2-2)^{th} surface 3222 may be referred to as a "first inclined surface."

According to an embodiment, the third rail wall 323 may include a (3-1)^{th} surface 3231. The (3-1)^{th} surface 3231 may extend from the second wall 325 in the first direction (e.g., the +Y direction) in which the head 2133 is inserted. The (3-1)^{th} surface 3231 may be inclined with respect to the first direction (the +Y direction). The (3-1)^{th} surface 3231 may be inclined from the second wall 325 toward the space 326 into which the head 2133 is inserted. The third rail wall 323 may include a (3-2)^{th} surface 3232. The (3-2)^{th} surface 3232 may extend in the first direction (the +Y direction) in which the head 2133 is inserted. The (3-2)^{th} surface 3232 may be connected to the first rail wall 321. The third rail wall 323 may include a second curved surface 3233. The second curved surface 3233 may connect the (3-1)^{th} surface 3231 and the (3-2)^{th} surface 3232. The second curved surface 3233 may be curved from the (3-1)^{th} surface 3231 toward the direction (the +Y direction) in which the head 2133 is inserted. The (3-1)^{th} surface 3231 may be referred to as a "second inclined surface." The (3-2)^{th} surface 3232 may be referred to as a "second surface."

According to an embodiment, the first inclined surface 3222 may overlap the second surface 3232 when viewed in a second direction perpendicular to the first direction in which the head 2133 is inserted. The second inclined surface 3231 may overlap the first surface 3221 when viewed in the second direction perpendicular to the first direction in which the head 2133 is inserted.

According to an embodiment, the (2-1)^{th} surface 3221 and the (3-1)^{th} surface 3231 may be spaced apart from each other in the second direction (e.g., the +Z direction) intersecting the first direction (for example, the +Y direction) in which the head 2133 is inserted. The (2-2)^{th} surface 3222 and the (3-2)^{th} surface 3232 may be spaced apart from each other in the second direction (e.g., the +Z direction) intersecting the first direction (e.g., the +Y direction) in which the head 2133 is inserted. The first curved surface 3223 and the second curved surface 3233 may be spaced apart from each other in the second direction (e.g., the +Z direction) intersecting the first direction (e.g., the +Y direction) in which the head 2133 is inserted.

According to an embodiment, the guide 300 may include a guide space 326. The head 2133 may be inserted into the guide space 326. The guide space 326 may be surrounded by the first, second, and third rail walls 321, 322, and 323. The head 2133 may move within the guide space 326. The guide space 326 may be a portion of a space surrounded by the first, second, and third rail walls 321, 322, and 323. For example, the guide space 326 may be a portion of a space bounded by planes respectively extending from the (2-1)^{th} surface 3221, the (1-1)^{th} surface 3211, and the (3-2)^{th} surface 3232.

According to an embodiment, the guide 300 may include a first expansion space 327. The first expansion space 327 may communicate with the guide space 326. The first expansion space 327 may be a portion of the space surrounded by the first, second, and third rail walls 321, 322, and 323. For example, the first expansion space 327 may be a portion of a space bounded by planes respectively extending from the (2-1)^{th} surface 3221, the (2-2)^{th} surface 3222, and the (1-2)^{th} surface 3212. The first expansion space 327 may be referred to as an "expansion space." The first expansion space 327 may be referred to as a "recess." The first expansion space 327 may be referred to as a "first recess." The first recess 327 may include the (2-2)^{th} surface 3222. The first recess 327 may include the first curved surface 3223.

According to an embodiment, the guide 300 may include a second expansion space 328. The second expansion space 328 may be in communication with the guide space 326. The second expansion space 328 may be a portion of a space surrounded by the first, second, and third rail walls 321, 322, and 323. For example, the second expansion space 328 may be a portion of a space bounded by planes extending from the (3-1)^{th} surface 3231, the (3-2)^{th} surface 3232, and the second wall 325, respectively. The second expansion space 328 may be referred to as an "expansion space." The second expansion space 328 may be referred to as a "recess." The second expansion space 328 may be referred to as a "second recess." The second recess 328 may include the (3-1)^{th} surface 3231. The second recess 328 may include the second curved surface 3233.

According to an embodiment, the first recess 327 and the second recess 328 may be misaligned with each other when viewed in a second direction perpendicular to a first direction in which the head 2133 is inserted. At least a portion of the first recess 327 and at least a portion of the second recess 328 may overlap each other when viewed in the second direction perpendicular to the first direction in which the head 2133 is inserted into the rail 320.

According to an embodiment, the guide 300 may include expansion spaces 327 and 328. The expansion spaces 327 and 328 may include a first expansion space 327 and a second expansion space 328. The guide 300 may include recesses 327 and 328. The recesses 327 and 328 may include a first recess 327 and a second recess 328. The recesses 327 and 328 may be defined as portions of wall surfaces of the rail 320 formed by the first, second, and third rail walls 321, 322, and 323.

According to an embodiment, the first expansion space 327 and the second expansion space 328 may be formed at positions opposite to each other with respect to the guide space 326. The first expansion space 327 and the second expansion space 328 may be formed at positions offset from each other in the second direction (e.g., the +Z direction) intersecting the first direction (e.g., the +Y direction) in which the head 2133 is inserted.

According to an embodiment, the first expansion space 327 may include a first width w1 in the first direction (e.g., the +Y direction) and a first height h1 in the second direction (e.g., the +Z direction). The first width w1 and the first height h1 of the first expansion space 327 may vary along an extension direction of the rail 320. For example, referring to FIGS. 11 and 13, the first width of the first rail portion 320a may be smaller than the first width of the second rail portion 320b. For example, referring to FIGS. 11 and 13, the first height of the first rail portion 320a may be smaller than the first height of the second rail portion 320b. The first width w1 of the first expansion space 327 may be equal to the length of the (2-2)^{th} surface 3222 in the first direction (the +Y direction). The first height h1 of the first expansion space 327 may be equal to the length of the (1-2)^{th} surface 3212 in the second direction (the +Z direction).

According to an embodiment, the second expansion space 328 may include a second width w2 in the first direction (e.g., the +Y direction) and a second height h2 in the second direction (e.g., the +Z direction). The second width w2 and the second height h2 of the second expansion space 328 may vary along an extension direction of the rail 320. For example, referring to FIGS. 11 and 13, the second width of the first rail portion 320a may be smaller than the second width of the second rail portion 320b. For example, referring to FIGS. 11 and 13, the second height of the first rail portion 320a may be smaller than the second height of the second rail portion 320b. The second width w2 of the second expansion space 328 may be equal to the length of the (3-1)^{th} surface 3231 in the first direction (the +Y direction). The second height h2 of the second expansion space 328 may be equal to the length of the (3-1)^{th} surface 3231 in the second direction (the +Z direction).

According to an embodiment, at least a portion of the first expansion space 327 and at least a portion of the second expansion space 328 may overlap each other in the second direction (e.g., the +Z direction) intersecting the first direction (e.g., the +Y direction) in which the head 2133 is inserted. The first curved surface 3223 and the second curved surface 3233 may be spaced apart from each other in the second direction (the +Z direction). At least a portion of the head 2133 may be positioned between the first curved surface 3223 and the second curved surface 3233. At least a portion of the first expansion space 327 and at least a portion of the second expansion space 328 may have an overlap length G in the first direction (the +Y direction). The overlap length G between the first expansion space 327 and the second expansion space 328 may vary along the extension direction of the rail 320. For example, referring to FIGS. 11 and 13, the overlap length of the first rail portion 320a may be smaller than the overlap length of the second rail portion 320b.

According to an embodiment, a gap D may be formed between the head 2133 and the rail 320. The gap D may be within a range of 0.02 mm to 0.03 mm. The gap D may be formed between the head 2133 and the second rail wall 322, or may be formed between the head 2133 and the third rail wall 323.

According to an embodiment, a thickness t1 of the head 2133 may be equal to or less than a thickness t2 of the rail 320. The thickness t2 of the rail 320 may be a length of the guide space 326 in the second direction (e.g., the +Z direction). A width p1 of the head 2133 may be smaller than a width p2 of the rail 320. The width p2 of the rail 320 may be a length of the guide space 326 in the first direction (e.g., the +Y direction). For example, the thickness t1 of the head 2133 may be within a range of 0.4 mm to 1.5 mm. For example, the thickness t2 of the rail 320 may be within a range of 0.4 mm to 1.5 mm. For example, the width p1 of the head 2133 may be within a range of 0.5 mm to 3 mm. For example, the width p2 of the guide space 326 may be within a range of 0.7 mm to 3.2 mm.

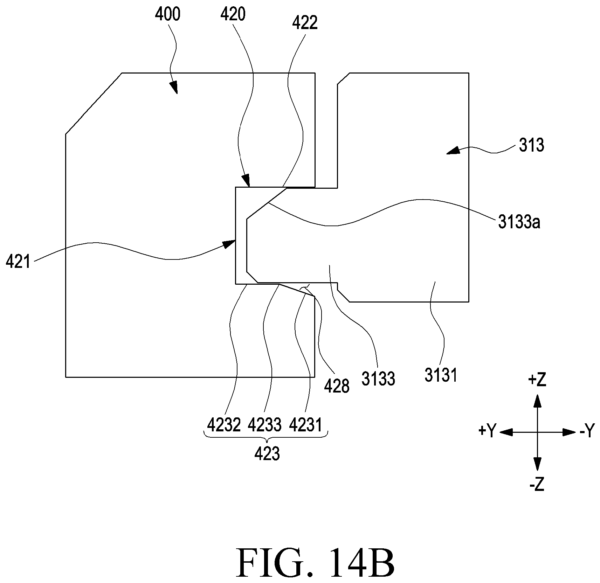

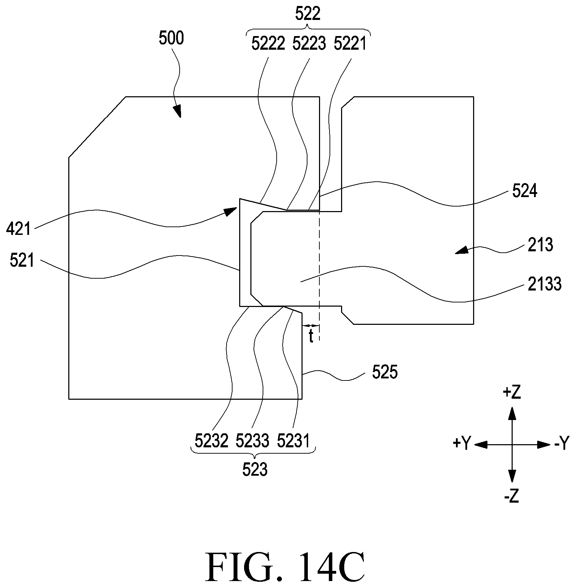

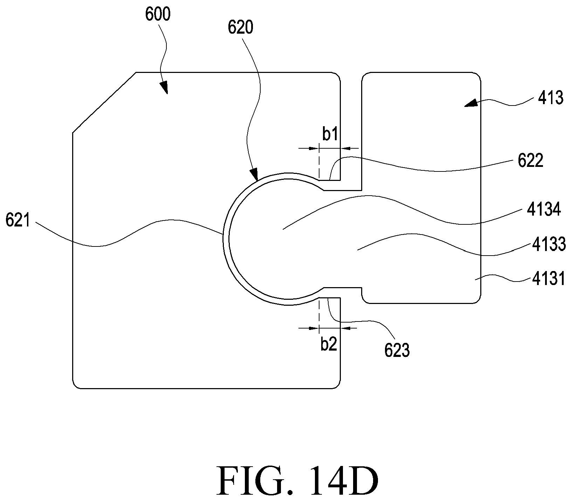

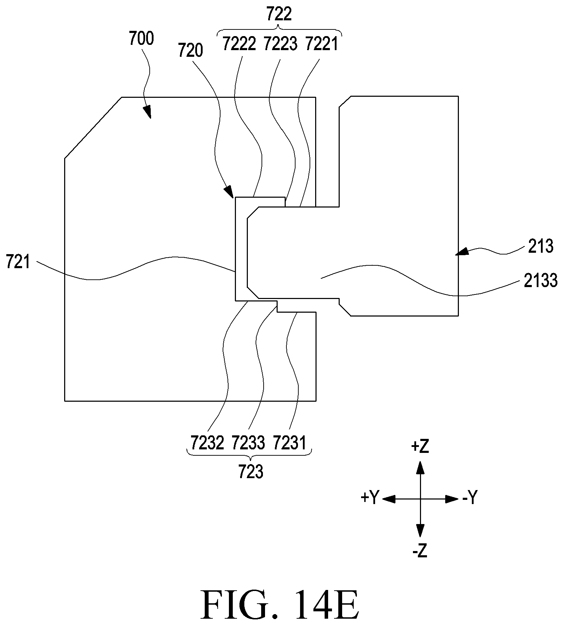

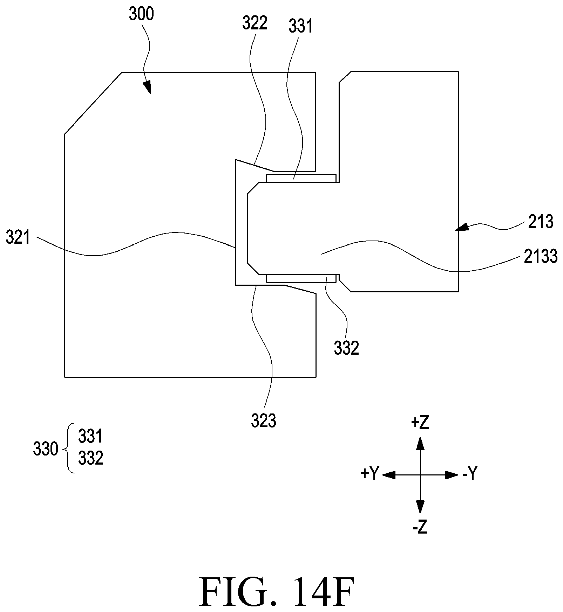

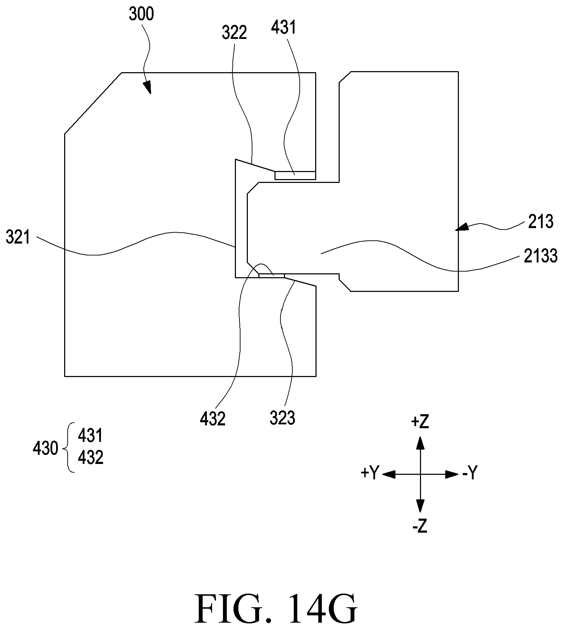

FIG. 14A is a view illustrating region M of FIG. 10 according to an embodiment of the disclosure. FIG. 14B is a view illustrating region M of FIG. 10 according to an embodiment of the disclosure. FIG. 14C is a view illustrating region M of FIG. 10 according to an embodiment of the disclosure. FIG. 14D is a view illustrating region M of FIG. 10 according to an embodiment of the disclosure. FIG. 14E is a view illustrating region M of FIG. 10 according to an embodiment of the disclosure. FIG. 14F is a view illustrating region M of FIG. 10 according to an embodiment of the disclosure. FIG. 14G is a view illustrating region M of FIG. 10 according to an embodiment of the disclosure. Components described with reference to FIGS. 14A to 14G may be partially or entirely the same as components described with reference to FIGS. 1 to 13.

Referring to FIG. 14A, the support member 313 may be inserted into the guide 300. The support member 313 may include a plate 3131 and a head 3133 inserted into the guide 300. The head 3133 may include a head surface 3133a facing the first expansion space 327. The head surface 3133a may be inclined with respect to the first direction (e.g., the +Y direction) in which the head 3133 is inserted. The head surface 3133a may be inclined in a direction away from the first expansion space 327. The head surface 3133a may be inclined in a direction opposite to the (2-2)^{th} surface 3222.

Referring to FIG. 14B, the rail 420 may include a first rail wall 421, a second rail wall 422, and a third rail wall 423. The description of the third rail wall 323 described with reference to FIGS. 12 and 13 may be equally applied to the third rail wall 423. For example, the third rail wall 423 may include a (3-1)^{th} surface 4231, a (3-2)^{th} surface 4232, and a second curved surface 4233. The first rail wall 421 and the second rail wall 422 may extend in directions intersecting each other. The rail 420 may include only a second expansion space 428. Unlike the rails illustrated in FIGS. 12 to 14A, the rail 420 may not include the first expansion space. The description of the head 3133 described with reference to FIG. 14A may be equally applied to the head 3133. For example, the head 3133 may include a head surface 3133a facing the second rail wall 422.

Referring to FIG. 14C, the rail 520 may include a first rail wall 521, a second rail wall 522, and a third rail wall 523. The description of components (e.g., the first rail wall 321, the second rail wall 322, and the third rail wall 323) described with reference to FIGS. 12 and 13 may be equally applied to the first, second, and third rail walls 521, 522, and 523. The guide 500 may include a first wall 524 and a second wall 525. The first wall 524 and the second wall 525 may be positioned to be offset from each other in the second direction (e.g., the +Z direction) intersecting the first direction (e.g., the +Y direction) in which the head 2133 is inserted. For example, the second wall 525 may be positioned farther from the support member 213 than the first wall 524 in the first direction (the +Y direction). A gap t in the first direction (the +Y direction) may be formed between the first wall 524 and the second wall 525.

Referring to FIG. 14D, the guide 600 may include a rail 620. The rail 620 may include a first rail wall 621 having an arch shape, a second rail wall 622 extending from the first rail wall 621 toward the support member 413, and a third rail wall 623 extending from the first rail wall 621 toward the support member 413. The support member 413 may include a plate 4131, a bridge 4133 extending from the plate 4131 toward the guide 600, and a head 4134 inserted into the rail 620. The bridge 4133 may connect the plate 4131 and the head 4134. The bridge 4133 may be positioned between the second rail wall 622 and the third rail wall 623. A width b1 of the second rail wall 622 may be smaller than a width b2 of the third rail wall 623. The second rail wall 622 may be positioned above the third rail wall 623, and when a downward load is applied to the support member 413, the third rail wall 623 having a relatively larger width than the second rail wall 622 may reduce sagging of the head 4134.

Referring to FIG. 14E, the guide 700 may include a rail 720. The rail 720 may include a first rail wall 721, a second rail wall 722, and a third rail wall 723. The second rail wall 722 may include a (2-1)^{th} surface 7221 and a (2-2)^{th} surface 7222 extending in a first direction (e.g., the +Y direction) in which the head 2133 is inserted. The second rail wall 722 may include a first stepped portion 7223 connecting the (2-1)^{th} surface 7221 and the (2-2)^{th} surface 7222. The third rail wall 723 may include a (3-1)^{th} surface 7231 and a (3-2)^{th} surface 7232 extending in the first direction (e.g., the +Y direction) in which the head 2133 is inserted. The third rail wall 723 may include a second stepped portion 7233 connecting the (3-1)^{th} surface 7231 and the (3-2)^{th} surface 7232. The head 2133 may be caught by the (2-1)^{th} surface 7221 and the (3-2)^{th} surface 7232.

Referring to FIG. 14F, the electronic device 101 may include a bearing 330 disposed between the support member 213 and the rail 320. The bearing 330 may include a first bearing 331 disposed between the head 2133 and the second rail wall 322, and a second bearing 332 disposed between the head 2133 and the third rail wall 323.

Referring to FIG. 14G, the electronic device 101 may include a bearing 430 disposed between the support member 213 and the rail 320. The bearing 430 may include a first bearing 431 disposed between the head 2133 and the second rail wall 322, and a second bearing 432 disposed between the head 2133 and the third rail wall 323. The size of the first bearing 431 may be larger than the size of the second bearing 432.

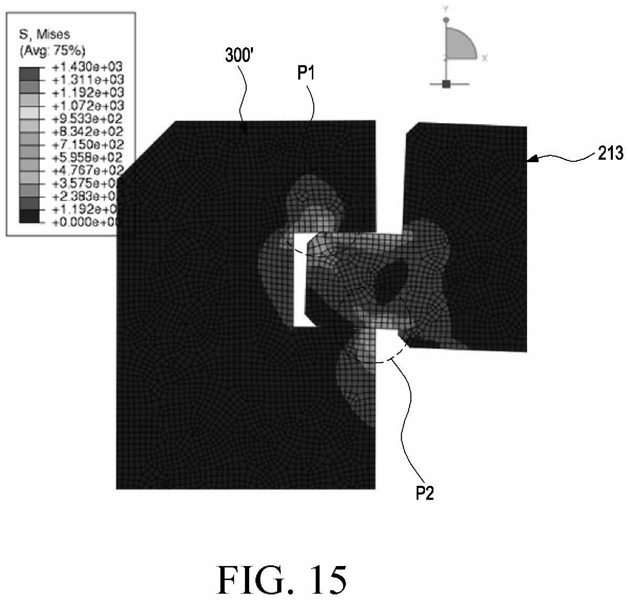

FIG. 15 is a contour illustrating a stress distribution applied to a guide 300' and a support member 213 of an electronic device according to a comparative example. Unlike the guides described with reference to FIGS. 1 to 14G, the guide 300' of the electronic device according to the comparative example does not include an expansion space. Due to a load of the display and the support member 213, stress not less than a predetermined level is applied to portions P1 and P2 at which interference occurs between the support member 213 and the guide 300'. A load caused by an object placed on the display causes sagging of the support member 213 and generates stress at the portions P1 and P2 at which interference occurs between the support member 213 and the guide 300'. Due to the stress, damage occurs to the guide 300' and the support member 213 at the portions P1 and P2. An electronic device according to various embodiments of the disclosure described with reference to FIGS. 1 to 14E includes a guide in which an expansion space is formed, thereby reducing stress generated between the guide and a support member.

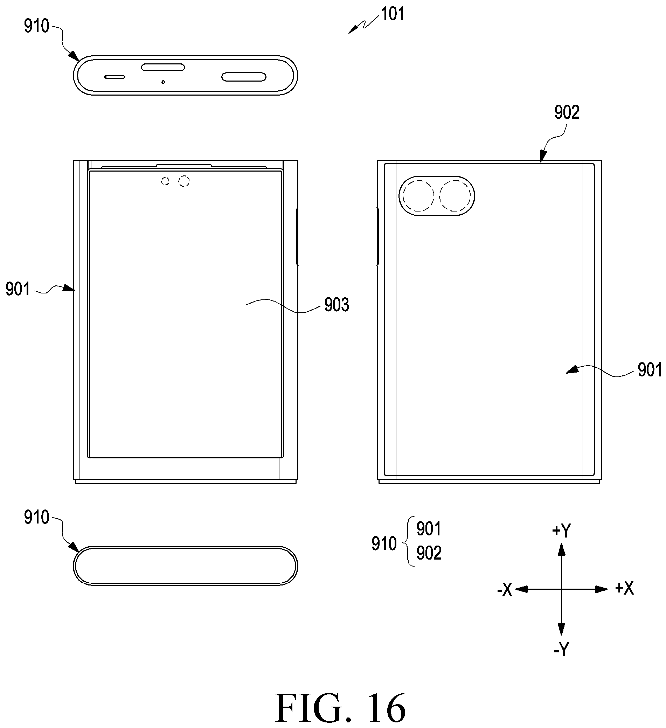

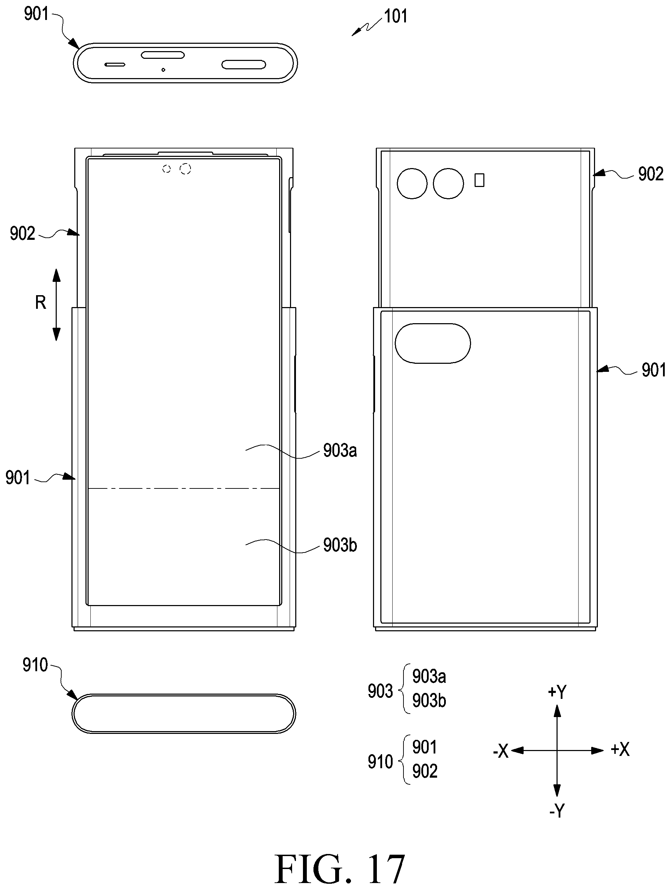

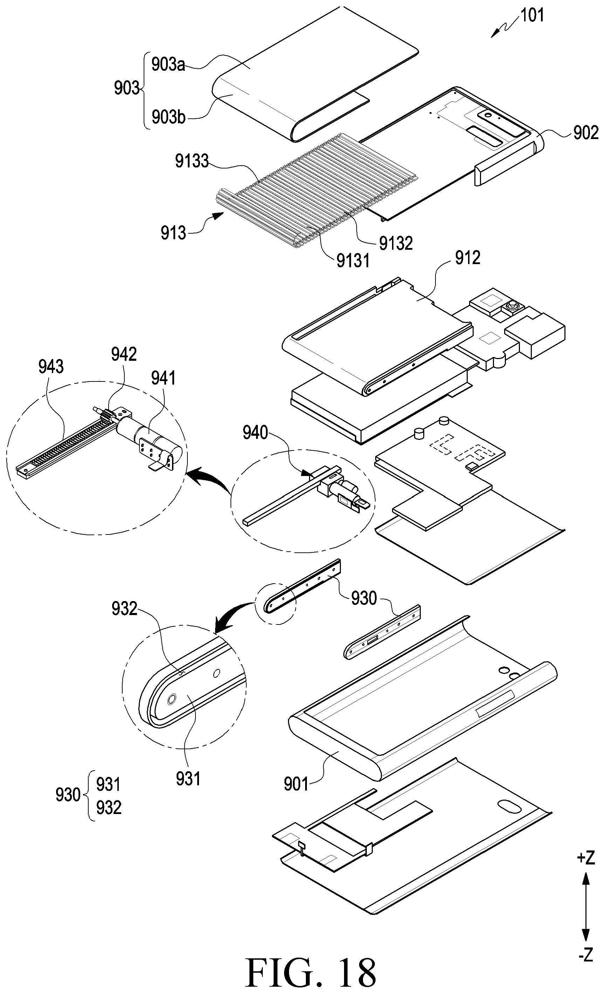

FIG. 16 is a view illustrating an electronic device 101 according to an embodiment of the disclosure. FIG. 17 is a view illustrating an electronic device 101 according to an embodiment of the disclosure. FIG. 18 is an exploded view of an electronic device 101 according to an embodiment of the disclosure. Components described with reference to FIGS. 16 to 18 may be partially or entirely the same as components described with reference to FIGS. 1 to 15.

According to an embodiment, the electronic device 101 may include a first housing 901 and a second housing 902 movably disposed relative to the first housing 901. The second housing 902 may slide in or slide out relative to the first housing 901 along a first direction R. The electronic device 101 may include a display 903. At least a portion of the display 903 may be deformable. A portion of the display 903 may be disposed in the first housing 901, and the remaining portion may be disposed in the second housing 902. The display 903 may include a first display area 903a that moves together with the second housing 902, and a second display area 903b configured such that at least a portion thereof is wound or unwound.

According to an embodiment, the electronic device 101 may include a support member 913. The support member 913 may include a plate 9131, support bars 9132, and heads 9133. The description of the support member 213 described with reference to FIG. 7B may be equally applied to the components of the support member 913. The support member 913 may support the display 903. The electronic device 101 may include a second support member 912 disposed between the support member 913 and the first housing 901.

According to an embodiment, the electronic device 101 may include a driving device 940. The driving device 940 may include a motor 941, a pinion gear 942, and a rack gear 943. The rack gear 943 may mesh with the display 903 or the support member 913. The support member 913 may move together with the rack gear 943. The rack gear 943 may mesh with the pinion gear 942. The motor 941 may rotate the pinion gear 942, and the rack gear 943 may move in a direction in which the display 903 moves (e.g., direction R of FIG. 17) while meshing with the pinion gear 942.

According to an embodiment, the electronic device 101 may include a guide 930. The description of the guide 300 described with reference to FIGS. 1 to 15 may be equally applied to the guide 930. For example, the guide 300 may include a guide body 931 and a rail 932 into which the head 9133 of the support member 913 is inserted. The description of the guide body 310 and the rail 320 described with reference to FIGS. 1 to 15 may be equally applied to the guide body 931 and the rail 932.

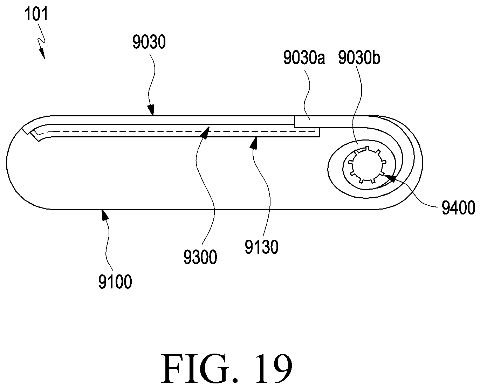

FIG. 19 is a partial cross-sectional view of an electronic device 101 according to an embodiment of the disclosure. Components described with reference to FIG. 19 may be partially or entirely the same as components described with reference to FIGS. 1 to 18.

According to an embodiment, an electronic device 101 may include a housing 9100, a display 9030, and a roller 9400. At least a portion of the display 9030 may be wound around or unwound from the roller 9400. The display 9030 may include a first display area 9030a and a second display area 9030b connected to the first display area 9030a and wound around the roller 9400. The electronic device 101 may include a support member 9130 that supports the display 9030. The support member 9130 may move together with the display 9030. The electronic device 101 may include a guide 9300 into which at least a portion of the support member 9130 is inserted. The support member 9130 may move along the guide 9300. The descriptions of the support member 213 and the guide 300 described with reference to FIGS. 1 to 15 may be equally applied to the support member 9130 and the guide 9300.

The issues to be addressed by the disclosure may include reducing stress applied to the support member.

The issues to be addressed by the disclosure may include reducing interference between the support member and the guide.

The issues to be addressed by the disclosure are not limited to those mentioned above and may be variously determined without departing from the spirit and scope of the disclosure.

According to various embodiments of the disclosure, an electronic device may reduce interference between a support member and a guide by inserting a head into a rail including an inclined surface.

According to various embodiments of the disclosure, an electronic device may reduce stress applied to a head by allowing a portion of the head to move into an expansion space.

The effects that are capable of being obtained by the disclosure are not limited to those described above, and other effects not described above may be clearly understood by a person ordinarily skilled in the art to which the disclosure belongs based on the following description.

An electronic device according to an embodiment of the disclosure (e.g., 101 of FIGS. 1 to 19) may include a housing (e.g., 210 of FIGS. 1 to 19) including a first housing part (e.g., 201 of FIGS. 1 to 19) and a second housing part (e.g., 202 of FIGS. 1 to 19) configured to move between a retracted position and an extended position with respect to the first housing part (e.g., 201 of FIGS. 1 to 19).

The electronic device according to an embodiment of the disclosure (e.g., 101 of FIGS. 1 to 19) may include a flexible display (e.g., 203 of FIGS. 1 to 19) supported by the first housing part (e.g., 201 of FIGS. 1 to 19) and the second housing part (e.g., 202 of FIGS. 1 to 19).

The electronic device according to an embodiment of the disclosure (e.g., 101 of FIGS. 1 to 19) may include a support member (e.g., 213 of FIGS. 1 to 19) movably disposed inside the housing (e.g., 210 of FIGS. 1 to 19) and including a plate (e.g., 2131 of FIGS. 1 to 19) on which at least a portion of the flexible display (e.g., 203 of FIGS. 1 to 19) is seated and a head (e.g., 2133 of FIGS. 1 to 19) which protrudes from the plate (e.g., 2131 of FIGS. 1 to 19).

An electronic device (e.g., 101 of FIGS. 1 to 19) according to an embodiment of the disclosure may include a guide (e.g., 300 of FIGS. 1 to 19) disposed between the housing (e.g., 210 of FIGS. 1 to 19) and the support member (e.g., 213 of FIGS. 1 to 19), the guide including a rail (e.g., 320 of FIGS. 1 to 19) extending along a direction in which the support member (e.g., 213 of FIGS. 1 to 19) moves.

According to an embodiment of the disclosure, the rail (e.g., 320 of FIGS. 1 to 19) may include a guide space (e.g., 326 of FIGS. 1 to 19) into which the head (e.g., 2133 of FIGS. 1 to 19) is inserted.

According to an embodiment of the disclosure, there are expansion spaces (e.g., 327 and 328 of FIGS. 1 to 19) formed in a second direction intersecting a first direction in which the head (e.g., 2133 of FIGS. 1 to 19) is inserted, with respect to the guide space (e.g., 326 of FIGS. 1 to 19).

According to an embodiment of the disclosure, the expansion spaces (e.g., 327 and 328 of FIGS. 1 to 19) may include a first expansion space (e.g., 327 of FIGS. 1 to 19) and a second expansion space (e.g., 328 of FIGS. 1 to 19) formed at positions opposite to each other with respect to the guide space (e.g., 326 of FIGS. 1 to 19).

According to an embodiment of the disclosure, the first expansion space (e.g., 327 of FIGS. 1 to 19) and the second expansion space (e.g., 328 of FIGS. 1 to 19) may be positioned offset from each other in a direction intersecting the first direction.

According to an embodiment of the disclosure, at least a portion of the first expansion space (e.g., 327 of FIGS. 1 to 19) and at least a portion of the second expansion space (e.g., 328 of FIGS. 1 to 19) may overlap each other in the direction intersecting the first direction.

According to an embodiment of the disclosure, the rail (e.g., 320 of FIGS. 1 to 19) may include a first rail wall (e.g., 321 of FIGS. 1 to 19).

According to an embodiment of the disclosure, the rail (e.g., 320 of FIGS. 1 to 19) may include a second rail wall (e.g., 322 of FIGS. 1 to 19) extending from the first rail wall (e.g., 321 of FIGS. 1 to 19).

According to an embodiment of the disclosure, the rail (e.g., 320 of FIGS. 1 to 19) may include a third rail wall (e.g., 323 of FIGS. 1 to 19) extending from the first rail wall (e.g., 321 of FIGS. 1 to 19) and spaced apart from the second rail wall (e.g., 322 of FIGS. 1 to 19).

According to an embodiment of the disclosure, the second rail wall (e.g., 322 of FIGS. 1 to 19) may include a (2-1)^{th} surface (e.g., 3221 of FIGS. 1 to 19) extending along the first direction.

According to an embodiment of the disclosure, the second rail wall (e.g., 322 of FIGS. 1 to 19) may include a (2-2)^{th} surface (e.g., 3222 of FIGS. 1 to 19) inclined with respect to the first direction.

According to an embodiment of the disclosure, there is a first curved surface (e.g., 3223 of FIGS. 1 to 19) connecting the (2-1)^{th} surface (e.g., 3221 of FIGS. 1 to 19) and the (2-2)^{th} surface (e.g., 3222 of FIGS. 1 to 19).

According to an embodiment of the disclosure, the third rail wall (e.g., 323 of FIGS. 1 to 19) may include a (3-1)^{th} surface (e.g., 3231 of FIGS. 1 to 19) inclined with respect to the first direction.

According to an embodiment of the disclosure, the third rail wall (e.g., 323 of FIGS. 1 to 19) may include a (3-2)^{th} surface (e.g., 3232 of FIGS. 1 to 19) extending along the first direction.

According to an embodiment of the disclosure, the third rail wall (e.g., 323 of FIGS. 1 to 19) may include a second curved surface (e.g., 3233 of FIGS. 1 to 19) connecting the (3-1)^{th} surface (e.g., 3231 of FIGS. 1 to 19) and the (3-2)^{th} surface (e.g., 3232 of FIGS. 1 to 19).

According to an embodiment of the disclosure, the guide (e.g., 300 of FIGS. 1 to 19) may include a first guide portion (e.g., 300a of FIGS. 1 to 19).

According to an embodiment of the disclosure, the guide (e.g., 300 of FIGS. 1 to 19) may include a second guide portion (e.g., 300b of FIGS. 1 to 19) curvedly extending from the first guide portion (e.g., 300a of FIGS. 1 to 19).

According to an embodiment of the disclosure, the width, at the first guide portion (e.g., 300a of FIGS. 1 to 19), of the expansion spaces (e.g., 327 and 328 of FIGS. 1 to 19) in the first direction may be smaller than the width, at the second guide portion (e.g., 300b of FIGS. 1 to 19), of the expansion spaces (e.g., 327 and 328 of FIGS. 1 to 19) in the first direction.

According to an embodiment of the disclosure, a height, at the first guide portion (e.g., 300a of FIGS. 1 to 19), of the expansion spaces (e.g., 327 and 328 of FIGS. 1 to 19) in the second direction may be smaller than a height, at the second guide portion (e.g., 300b of FIGS. 1 to 19), of the expansion spaces (e.g., 327 and 328 of FIGS. 1 to 19) in the second direction.

According to an embodiment of the disclosure, an overlapping length (e.g., G of FIGS. 1 to 19), at the first guide portion (e.g., 300a of FIGS. 1 to 19), of the first expansion space (e.g., 327 of FIGS. 1 to 19) and the second expansion space (e.g., 328 of FIGS. 1 to 19) may be smaller than an overlapping length (e.g., G of FIGS. 1 to 19), at the second guide portion (e.g., 300b of FIGS. 1 to 19), of the first expansion space (e.g., 327 of FIGS. 1 to 19) and the second expansion space (e.g., 328 of FIGS. 1 to 19).

A clearance (e.g., D of FIGS. 1 to 19) may be formed between the rail (e.g., 320 of FIGS. 1 to 19) and the head (e.g., 2133 of FIGS. 1 to 19) according to an embodiment of the disclosure.

According to an embodiment of the disclosure, the head (e.g., 313 of FIGS. 1 to 19) may include a head surface (e.g., 3133a of FIGS. 1 to 19) inclined in a direction away from the expansion spaces (e.g., 327 and 328 of FIGS. 1 to 19).

According to an embodiment of the disclosure, the guide (e.g., 500 of FIGS. 1 to 19) may include a first wall (e.g., 524 of FIGS. 1 to 19) facing the support member (e.g., 213 of FIGS. 1 to 19).

According to an embodiment of the disclosure, the guide (e.g., 500 of FIGS. 1 to 19) may include a second wall (e.g., 525 of FIGS. 1 to 19) facing the support member (e.g., 213 of FIGS. 1 to 19) and spaced apart from the first wall (e.g., 524 of FIGS. 1 to 19).

According to an embodiment of the disclosure, the second wall (e.g., 525 of FIGS. 1 to 19) may be positioned farther from the support member (e.g., 213 of FIGS. 1 to 19) than the first wall (e.g., 524 of FIGS. 1 to 19) in the first direction.

According to an embodiment of the disclosure, the rail (e.g., 620 of FIGS. 1 to 19) may include a first rail wall (e.g., 621 of FIGS. 1 to 19) having an arch shape and facing the head (e.g., 4134 of FIGS. 1 to 19).

According to an embodiment of the disclosure, the rail (e.g., 720 of FIGS. 1 to 19) may include a second rail wall (e.g., 722 of FIGS. 1 to 19) including a (2-1)^{th} surface (e.g., 7221 of FIGS. 1 to 19) extending in the first direction, a (2-2)^{th} surface (e.g., 7222 of FIGS. 1 to 19) extending in the first direction, and a first stepped portion (e.g., 7223 of FIGS. 1 to 19) connecting the (2-1)^{th} surface (e.g., 7221 of FIGS. 1 to 19) and the (2-2)^{th} surface (e.g., 7222 of FIGS. 1 to 19).

According to an embodiment of the disclosure, an electronic device (e.g., 101 of FIGS. 1 to 19) may include a guide (e.g., 300 of FIGS. 1 to 19) disposed between the housing (e.g., 210 of FIGS. 1 to 19) and the support member (e.g., 213 of FIGS. 1 to 19), the guide including a rail (e.g., 320 of FIGS. 1 to 19) having a guide space (e.g., 326 of FIGS. 1 to 19) into which the head (e.g., 2133 of FIGS. 1 to 19) of the support member (e.g., 213 of FIGS. 1 to 19) is inserted and extending along a direction in which the support member (e.g., 213 of FIGS. 1 to 19) moves.

According to an embodiment of the disclosure, the rail (e.g., 320 of FIGS. 1 to 19) may include a first surface (e.g., 3221 of FIGS. 1 to 19) extending in a direction in which the head (e.g., 2133 of FIGS. 1 to 19) is inserted.

According to an embodiment of the disclosure, the rail (e.g., 320 of FIGS. 1 to 19) may include a second surface (e.g., 3222 of FIGS. 1 to 19) extending from the first surface (e.g., 3221 of FIGS. 1 to 19) and extending away from the guide space (e.g., 326 of FIGS. 1 to 19) along an extending direction.

According to an embodiment of the disclosure, the rail (e.g., 320 of FIGS. 1 to 19) may include an expansion space (e.g., 327 of FIGS. 1 to 19) defined by a boundary formed by the second surface (e.g., 3222 of FIGS. 1 to 19).

An electronic device (e.g., 101 of FIGS. 1 to 19) according to an embodiment of the disclosure may include a guide (e.g., 300 of FIGS. 1 to 19) including a rail (e.g., 320 of FIGS. 1 to 19) configured such that at least a portion of the head (e.g., 2133 of FIGS. 1 to 19) is inserted.

According to an embodiment of the disclosure, the rail (e.g., 320 of FIGS. 1 to 19) may include recesses (e.g., 327 and 328 of FIGS. 1 to 19) formed in directions away from the head (e.g., 2133 of FIGS. 1 to 19) with respect to the guide space (e.g., 326 of FIGS. 1 to 19).

According to an embodiment of the disclosure, the recesses (e.g., 327 and 328 of FIGS. 1 to 19) may include a first recess (e.g., 327 of FIGS. 1 to 19) recessed in a first direction away from the head (e.g., 2133 of FIGS. 1 to 19) with respect to the guide space (e.g., 326 of FIGS. 1 to 19).

According to an embodiment of the disclosure, the recesses (e.g., 327 and 328 of FIGS. 1 to 19) may include a second recess (e.g., 328 of FIGS. 1 to 19) recessed in a second direction away from the head (e.g., 2133 of FIGS. 1 to 19) with respect to the guide space (e.g., 326 of FIGS. 1 to 19).

According to an embodiment of the disclosure, the first recess (e.g., 327 of FIGS. 1 to 19) may be positioned farther than the second recess (e.g., 328 of FIGS. 1 to 19) in a direction in which the head (e.g., 2133 of FIGS. 1 to 19) is inserted into the rail (e.g., 320 of FIGS. 1 to 19).

According to an embodiment of the disclosure, at least a portion of the first recess (e.g., 327 of FIGS. 1 to 19) and at least a portion of the second recess (e.g., 328 of FIGS. 1 to 19) may overlap each other in a direction perpendicular to a direction in which the head (e.g., 2133 of FIGS. 1 to 19) is inserted into the rail (e.g., 320 of FIGS. 1 to 19).

According to an embodiment of the disclosure, the recesses (e.g., 327 and 328 of FIGS. 1 to 19) may be formed on at least one of the second rail wall (e.g., 322 of FIGS. 1 to 19) and the third rail wall (e.g., 323 of FIGS. 1 to 19).

According to an embodiment of the disclosure, a width, at the first guide portion (e.g., 300a of FIGS. 1 to 19), of the recesses (e.g., 327 and 328 of FIGS. 1 to 19) in a direction in which the head (e.g., 2133 of FIGS. 1 to 19) is inserted into the rail (e.g., 320 of FIGS. 1 to 19) may be smaller than a width, at the second guide portion (e.g., 300b of FIGS. 1 to 19), of the recesses (e.g., 327 and 328 of FIGS. 1 to 19) in the direction in which the head (e.g., 2133 of FIGS. 1 to 19) is inserted into the rail (e.g., 320 of FIGS. 1 to 19).

According to an embodiment of the disclosure, a height, at the first guide portion (e.g., 300a of FIGS. 1 to 19), of the recesses (e.g., 327 and 328 of FIGS. 1 to 19) in a direction away from the head (e.g., 2133 of FIGS. 1 to 19) may be smaller than a height, at the second guide portion (e.g., 300b of FIGS. 1 to 19), of the recesses (e.g., 327 and 328 of FIGS. 1 to 19) in the direction away from the head (e.g., 2133 of FIGS. 1 to 19).

According to an embodiment of the disclosure, the recesses (e.g., 327 and 328 of FIGS. 1 to 19) may include a first recess (e.g., 327 of FIGS. 1 to 19) and a second recess (e.g., 328 of FIGS. 1 to 19), which are formed at positions opposite to each other with respect to the guide space (e.g., 326 of FIGS. 1 to 19) and overlap each other in a direction perpendicular to a direction in which the head (e.g., 2133 of FIGS. 1 to 19) is inserted into the rail (e.g., 320 of FIGS. 1 to 19).

According to an embodiment of the disclosure, an overlapping length (G), at the first guide portion (e.g., 300a of FIGS. 1 to 19), of the first recess (e.g., 327 of FIGS. 1 to 19) and the second recess (e.g., 328 of FIGS. 1 to 19) may be smaller than an overlapping length (G), at the second guide portion (e.g., 300b of FIGS. 1 to 19), of the first recess (e.g., 327 of FIGS. 1 to 19) and the second recess (e.g., 328 of FIGS. 1 to 19).

According to an embodiment of the disclosure, the head (e.g., 313 of FIGS. 1 to 19) may include a head surface (e.g., 3133a of FIGS. 1 to 19) inclined in a direction away from the recesses (e.g., 327 and 328 of FIGS. 1 to 19).

According to an embodiment of the disclosure, the second wall (e.g., 525 of FIGS. 1 to 19) may be positioned farther than the first wall (e.g., 524 of FIGS. 1 to 19), with respect to the support member (e.g., 213 of FIGS. 1 to 19), in a direction in which the head (e.g., 2133 of FIGS. 1 to 19) is inserted into the rail (e.g., 320 of FIGS. 1 to 19).

According to an embodiment of the disclosure, the guide (e.g., 300 of FIGS. 1 to 19) may include a first guide surface (e.g., 324 of FIGS. 1 to 19) facing the support member (e.g., 213 of FIGS. 1 to 19).

The guide (e.g., 300 of FIGS. 1 to 19) according to an embodiment of the disclosure may include a second guide surface (e.g., 325 of FIGS. 1 to 19) facing the support member (e.g., 213 of FIGS. 1 to 19) and spaced apart from the first guide surface (e.g., 324 of FIGS. 1 to 19).

According to an embodiment of the disclosure, the rail (e.g., 320 of FIGS. 1 to 19) may be configured to allow insertion of the head (e.g., 2133 of FIGS. 1 to 19) and may include a guide space (e.g., 326 of FIGS. 1 to 19), which is formed at least in part between the first guide surface (e.g., 324 of FIGS. 1 to 19) and the second guide surface (e.g., 325 of FIGS. 1 to 19).

According to an embodiment of the disclosure, the rail (e.g., 320 of FIGS. 1 to 19) may include a first surface (e.g., 3221 of FIGS. 1 to 19) extending from the first guide surface (e.g., 324 of FIGS. 1 to 19) in a first direction in which the head (e.g., 2133 of FIGS. 1 to 19) is inserted.

According to an embodiment of the disclosure, the rail (e.g., 320 of FIGS. 1 to 19) may include a first recess (e.g., 327 of FIGS. 1 to 19) including a first inclined surface (e.g., 3222 of FIGS. 1 to 19) inclined from the first surface (e.g., 3221 of FIGS. 1 to 19) in a direction away from the head (e.g., 2133 of FIGS. 1 to 19).

According to an embodiment of the disclosure, the rail (e.g., 320 of FIGS. 1 to 19) may include a second recess (e.g., 328 of FIGS. 1 to 19) including a second inclined surface (e.g., 3231 of FIGS. 1 to 19) inclined from the second guide surface (e.g., 325 of FIGS. 1 to 19) in a direction toward the head (e.g., 2133 of FIGS. 1 to 19).

According to an embodiment of the disclosure, the first recess (e.g., 327 of FIGS. 1 to 19) and the second recess (e.g., 328 of FIGS. 1 to 19) may be positioned offset from each other in a second direction perpendicular to the first direction in which the head (e.g., 2133 of FIGS. 1 to 19) is inserted.

According to an embodiment of the disclosure, the first recess (e.g., 327 of FIGS. 1 to 19) may be positioned farther than the second recess (e.g., 328 of FIGS. 1 to 19) in the first direction in which the head (e.g., 2133 of FIGS. 1 to 19) is inserted into the rail (e.g., 320 of FIGS. 1 to 19).

According to an embodiment of the disclosure, at least a portion of the first recess (e.g., 327 of FIGS. 1 to 19) and at least a portion of the second recess (e.g., 328 of FIGS. 1 to 19) may overlap each other in a second direction perpendicular to the first direction in which the head (e.g., 2133 of FIGS. 1 to 19) is inserted into the rail (e.g., 320 of FIGS. 1 to 19).

According to an embodiment of the disclosure, the first recess (e.g., 327 of FIGS. 1 to 19), the rail (e.g., 320 of FIGS. 1 to 19) may include a second surface (e.g., 3232 of FIGS. 1 to 19) extending from the second inclined surface (e.g., 3231 of FIGS. 1 to 19) along the first direction in which the head (e.g., 2133 of FIGS. 1 to 19) is inserted.

According to an embodiment of the disclosure, the first inclined surface (e.g., 3222 of FIGS. 1 to 19) may face the second surface (e.g., 3232 of FIGS. 1 to 19) in a direction perpendicular to the first direction in which the head (e.g., 2133 of FIGS. 1 to 19) is inserted.

According to an embodiment of the disclosure, the second inclined surface (e.g., 3231 of FIGS. 1 to 19) may face the first surface (e.g., 3221 of FIGS. 1 to 19) in a direction perpendicular to the first direction in which the head (e.g., 2133 of FIGS. 1 to 19) is inserted.

According to an embodiment of the disclosure, the first recess (e.g., 327 of FIGS. 1 to 19) and the second recess (e.g., 328 of FIGS. 1 to 19) may not be aligned with each other when viewed in a second direction perpendicular to the first direction in which the head (e.g., 2133 of FIGS. 1 to 19) is inserted.

According to an embodiment of the disclosure, at least a portion of the first recess (e.g., 327 of FIGS. 1 to 19) and at least a portion of the second recess (e.g., 328 of FIGS. 1 to 19) may overlap each other when viewed in the second direction perpendicular to the first direction in which the head (e.g., 2133 of FIGS. 1 to 19) is inserted into the rail (e.g., 320 of FIGS. 1 to 19).

According to an embodiment of the disclosure, the first inclined surface (e.g., 3222 of FIGS. 1 to 19) may overlap the second surface (e.g., 3232 of FIGS. 1 to 19) when viewed in the second direction perpendicular to the first direction in which the head (e.g., 2133 of FIGS. 1 to 19) is inserted.

According to an embodiment of the disclosure, the second inclined surface (e.g., 3231 of FIGS. 1 to 19) may overlap the first surface (e.g., 3221 of FIGS. 1 to 19) when viewed in the second direction perpendicular to the first direction in which the head (e.g., 2133 of FIGS. 1 to 19) is inserted.

In the foregoing detailed description of this document, specific embodiments have been described. However, it will be evident to a person ordinarily skilled in the art that various modifications can be made without departing from the scope of the disclosure.

Although the disclosure has been described with reference to an embodiment as an example, it is to be understood that the embodiment is intended to be exemplary and is not limiting the disclosure. It will be apparent to those skilled in the art that various changes in form and detail may be made without departing from the overall scope of the disclosure, including the appended claims and their equivalents.

## Claims

1. An electronic device (101) comprising:
a flexible display (203);
a support member (213) comprising a plate (2131) on which at least a portion of the flexible display (203) is seated, and a head (2133) protruding from the plate (2131); and
a guide (300) comprising a rail (320) configured to allow at least a portion of the head (2133) to be inserted therein,
wherein the guide (300) comprises:
a first guide surface (324) facing the support member (213), and
a second guide surface (325) facing the support member (213) and spaced apart from the first guide surface (324), and
wherein the rail (320) comprises:
a guide space (326) configured to allow the head (2133) to be inserted therein and formed at least in part between the first guide surface (324) and the second guide surface (325),
a first surface (3221) extending from the first guide surface (324) in a first direction in which the head (2133) is inserted,
a first recess (327) comprising a first inclined surface (3222) extending from the first surface (3221) in a direction away from the head (2133), and
a second recess (328) comprising a second inclined surface (3231) inclined toward the head (2133) from the second guide surface (325).

2. The electronic device of claim 1, wherein the first recess (327) and the second recess (328) are not aligned with each other when viewed in a second direction perpendicular to the first direction in which the head (2133) is inserted.

3. The electronic device of claim 2, wherein the first recess (327) is positioned farther than the second recess (328) in the first direction in which the head (2133) is inserted into the rail (320).

4. The electronic device of claim 2 or 3, wherein at least a portion of the first recess (327) and at least a portion of the second recess (328) overlap each other when viewed in the second direction which is perpendicular to the first direction in which the head (2133) is inserted into the rail (320).

5. The electronic device of any one of claims 1 to 4, wherein the rail (320) comprises a second surface (3232) extending from the second inclined surface (3231) along the first direction in which the head (2133) is inserted,
wherein the first inclined surface (3222) overlaps the second surface (3232) when viewed in the second direction perpendicular to the first direction in which the head (2133) is inserted, and
wherein the second inclined surface (3231) overlaps the first surface (3221) when viewed in the second direction perpendicular to the first direction in which the head (2133) is inserted.

6. The electronic device of any one of claims 1 to 5, wherein the rail (320) comprises:
a first rail wall (321) facing the head (2133) in the first direction in which the head (2133) is inserted into the rail (320);
a second rail wall (322) extending from the first rail wall (321); and
a third rail wall (323) extending from the first rail wall (321) and spaced apart from the second rail wall (322), and
wherein the second rail wall (322) comprises:
the first surface (3221) extending along the first direction; and
the first inclined surface (3222) inclined with respect to the first direction.

7. The electronic device of claim 6, wherein the third rail wall (323) comprises:
the second inclined surface (3231) inclined with respect to the first direction; and
a second surface (3232) extending from the second inclined surface (3231) along the first direction.

8. The electronic device of any one of claims 1 to 7, wherein the guide (300) comprises:
a first guide portion (300a); and
a second guide portion (300b) curvedly extending from the first guide portion (300a),
wherein a width, at the first guide portion (300a), of each of the first and second recesses (327, 328) in a direction in which the head (2133) is inserted into the rail (320) is smaller than a width, at the second guide portion (300b), of each of the first and second recesses (327, 328) in a direction in which the head (2133) is inserted into the rail (320).

9. The electronic device of any one of claims 1 to 8, wherein the guide (300) comprises:
a first guide portion (300a); and
a second guide portion (300b) curvedly extending from the first guide portion (300a),
wherein a height, at the first guide portion (300a), of each of the first and second recesses (327, 328) in a direction away from the head (2133) is smaller than a height, at the second guide portion (300b), of each of the first and second recesses (327, 328) in a direction away from the head (2133).

10. The electronic device of any one of claims 1 to 9, wherein the guide (300) comprises:
a first guide portion (300a); and
a second guide portion (300b) curvedly extending from the first guide portion (300a),
wherein the first and second recesses (327, 328) are formed at positions opposite to each other with respect to the guide space (326), and the first and second recesses (327, 328) overlap each other in a direction perpendicular to a direction in which the head (2133) is inserted into the rail (320), and
wherein an overlapping length (G) of the first recess (327) and the second recess (328) at the first guide portion (300a) is smaller than an overlapping length (G) of the first recess (327) and the second recess (328) at the second guide portion (300b).

11. The electronic device of any one of claims 1 to 10, wherein a gap (D) is formed between the rail (320) and the head (2133).

12. The electronic device of any one of claims 1 to 11, wherein the head (313) comprises a head surface (3133a) inclined in a direction away from the first and second recesses (327, 328).

13. The electronic device of any one of claims 1 to 12, wherein the guide (500) comprises:
the first guide surface (524) facing the support member (213); and
the second guide surface (525) facing the support member(213), and spaced apart from the first guide surface (524),
wherein the second guide surface (525) is positioned farther than the first guide surface (524) from the support member (213) in a direction in which the head (2133) is inserted into the rail (320).

14. The electronic device of any one of claims 1 to 13, wherein the rail (620) comprises a first rail wall (621) facing the head (4134) and having an arch shape.

15. The electronic device of any one of claims 1 to 14, wherein the rail (720) comprises a second rail wall (722) comprising a (2-1)^{th} surface (7221) extending in a direction in which the head (2133) is inserted into the rail (320), a (2-2)^{th} surface (7222) extending in the first direction, and a first stepped portion (7223) connecting the (2-1)^{th} surface (7221) and the (2-2)^{th} surface (7222).
